# EUROPEAN PATENT SPECIFICATION

(11) **EP 2 995 119 B1**
(45) Date of publication and mention of the grant of the patent: **05.04.2017**
(21) Application number: 14710666.0
(22) Date of filing: 21.02.2014
(51) Int. Cl.: H04W 36/00

(54) **HANDOVER PROCEDURES FOR USER EQUIPMENT IN A WIRELESS COMMUNICATION NETWORK**
ÜBERGABEVERFAHREN FÜR BENUTZERVORRICHTUNG IN EINEM DRAHTLOSEN KOMMUNIKATIONSNETZ
PROCÉDURES DE TRANSFERT POUR ÉQUIPEMENT UTILISATEUR DANS UN RÉSEAU DE COMMUNICATION SANS FIL

(30) Priority: 10.05.2013 US 201361821739 P
(43) Date of publication of application: 16.03.2016
(73) Proprietor: Telefonaktiebolaget LM Ericsson (publ), 164 83 Stockholm (SE)
(72) Inventor: CENTONZA, Angelo, Winchester SO22 5BA (GB); DA SILVA, Icaro L. J., S-195 21 Sollentuna (SE); GUNNARSSON, Fredrik, S-587 50 Linköping (SE)
(74) Representative: Kühn, Friedrich Heinrich
(86) International application number: PCT/SE2014/050220
(87) International publication number: WO 2014/182213

(56) References cited:
- EP-A1- 2 403 296
- EP-A1- 2 464 167
- WO-A1-2009/155992
- WO-A2-2012/169772
- NOKIA SIEMENS NETWORKS: "Mobility Setting Change procedure and misalignment of configuration", 3GPP DRAFT; R3-122502 SON_MOBILITY_CHANGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. New Orleans, USA; 20121112 - 20121116 2 November 2012 (2012-11-02), XP050670361, Retrieved from the Internet: URL:http://www.3gpp.org/ftp/tsg_ran/WG3_Iu /TSGR3_78/Docs/ [retrieved on 2012-11-02]
- "LTE; Evolved Universal Terrestrial Radio Access Network (E-UTRAN); X2 Application Protocol (X2AP) (3GPP TS 36.423 version 11.4.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V11.4.0, 1 April 2013 (2013-04-01), XP014156783,

## Description

### TECHNICAL FIELD

The proposed technology generally relates to handover procedures for user equipment in a wireless communication network, and particularly concerns methods for participating in a handover procedure, and corresponding network nodes and/or base stations such as source base stations and target base stations.

### BACKGROUND

Mobility in wireless communication networks is of outmost importance, and handover is a key feature for enabling mobile users to reliably enjoy the communication services with maintained quality.

By way of example, Mobility Load Balance, MLB, is one of the candidate use cases that might benefit from so-called UE grouping strategies, i.e. a source cell decides to handover or offload a group of users based on some criteria to a target cell whose load information is known.

Currently, 3GPP specifies the following components for the MLB solution:
- Load reporting; not the same for intra-LTE, Long Term Evolution, and inter-RAT, Radio Access Technology, in terms of: Load measures, Reporting Procedures.
- Load balancing action based on handovers, HOs.
- Adapting HO and/or cell reselection, CR, configuration so that the load remains balanced.

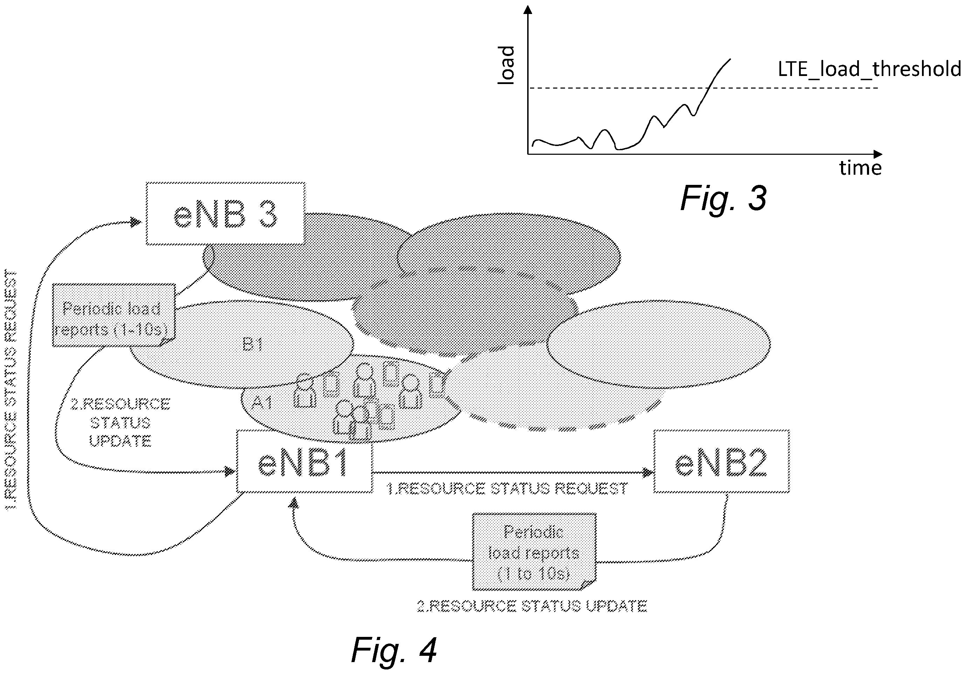

For example, the load reporting function is executed by exchanging cell specific load information between neighbor eNBs over the X2 (intra-LTE scenario) or S1 (inter-RAT scenario) interfaces where two procedures are involved; the Resource Status Initiation X2 and Resource Status Reporting X2 procedures, as highlighted in the schematic example of Figures 3 and 4:
The Resource Status Initiation X2 Procedure:
   - Initiated when Load > threshold in cell A1 (eNB1)
   - RESOURCE STATUS REQUEST X2AP message
      > Reporting Periodicity: 1 to 10 seconds
      > Load measure to be reported.
The Resource Status Reporting X2 Procedure:
   - RESOURCE STATUS UPDATE X2AP message

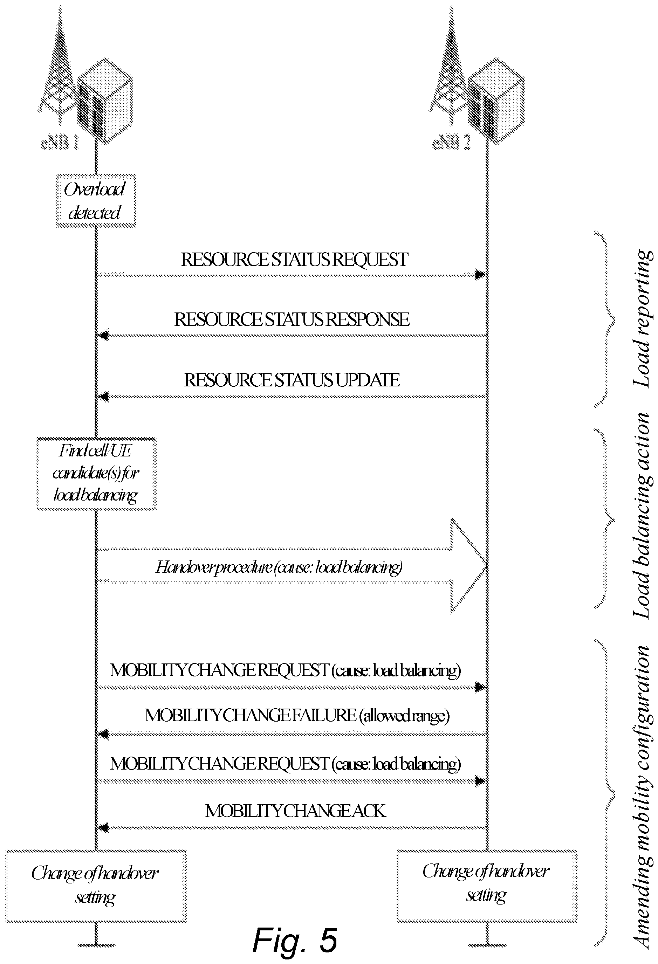

Once the source eNB has decided the target eNB and which UE's will be offloaded, it normally has to perform the Mobility Parameter Change Procedure followed by ordinary handovers, as depicted in the example of Figure 5.

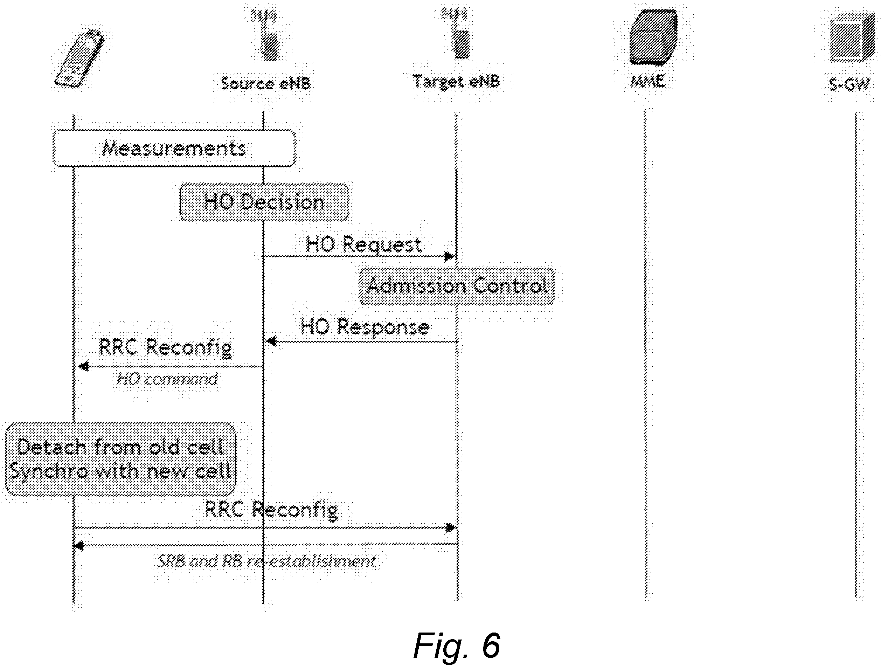

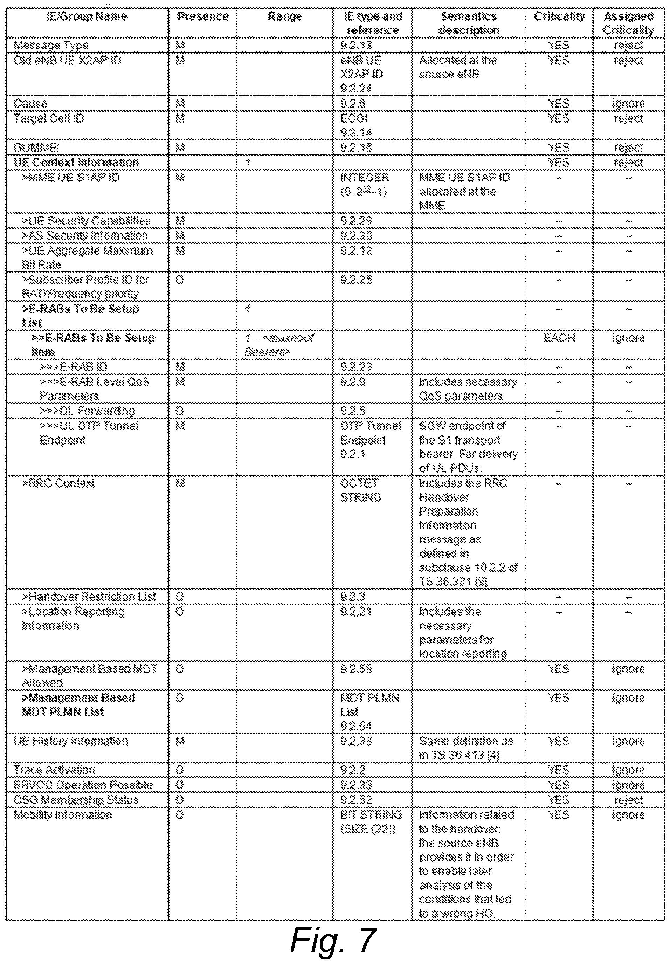

In the handover procedure, as illustrated in the example of Figure 6, caused by mobility load balance, the decision may be taken based on the measured load in the source eNB and the load reported from the requested neighbor eNBs. Once the decision to handover is taken, the source eNB sends an X2AP HANDOVER_REQUEST message, HO Request, to the target eNB passing necessary information to prepare the HO [3]. An example of a standardized message is shown in Figure 7. In the following, we describe some Information Entities, IEs, at the handover request messages, e.g. Mobility Information and RRC Context.

### Mobility Information

This is information sent via the HO Request which may be stored and sent from the target back to the source via the HO report, HO Response, so the source can retrieve UE context information about UE that have been handed over earlier.

This IE has been left unspecified in its content. The reason for its inclusion in the specifications is to avoid storing a UE context for each UE after mobility. This is related to the Mobility Robustness Optimization function, according to which it would be beneficial to know the UE context (valid in the node where the UE was subject to failure) of a UE subject to failure, in order to better identify the root cause of the failure. However, it was discussed that it could also be possible to classify UE contexts in groups, where each group will have certain characteristics in common.

The Mobility Information IE is therefore an identifier, understandable only by the eNB that sets it, and that could identify a group of UE contexts, which can be retrieved when the IE is received via HO Report.

### RRC Context

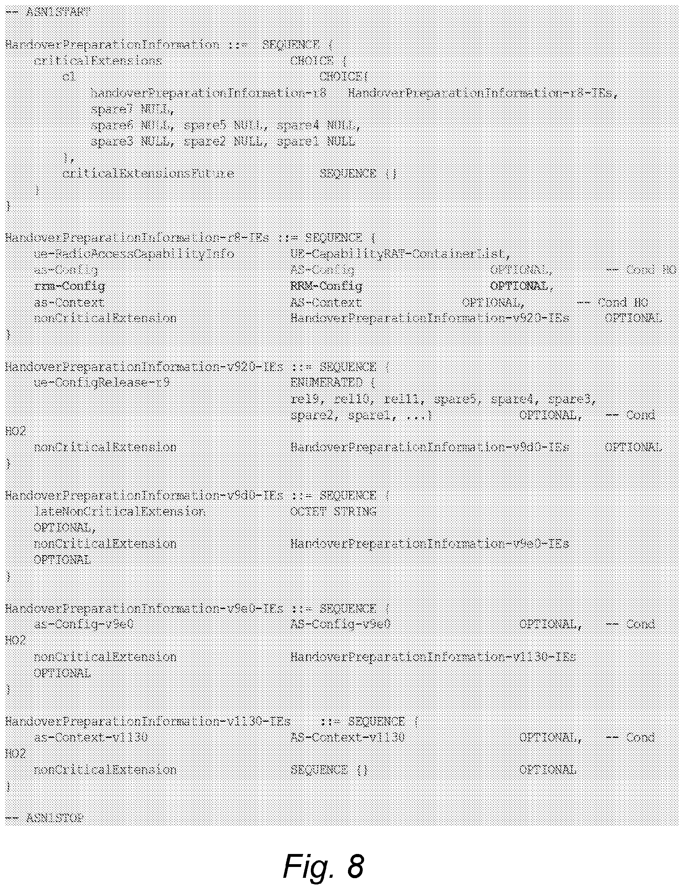

As showed in the example of Figure 7, the IE comprises the *Handover Preparation Information* message, which is used to transfer the Evolved Universal Terrestrial Radio Access, E-UTRA, Radio Resource Control, RRC, information used by the target eNB during handover preparation, comprising UE capability information, e.g. as detailed in the example of Figure 8.

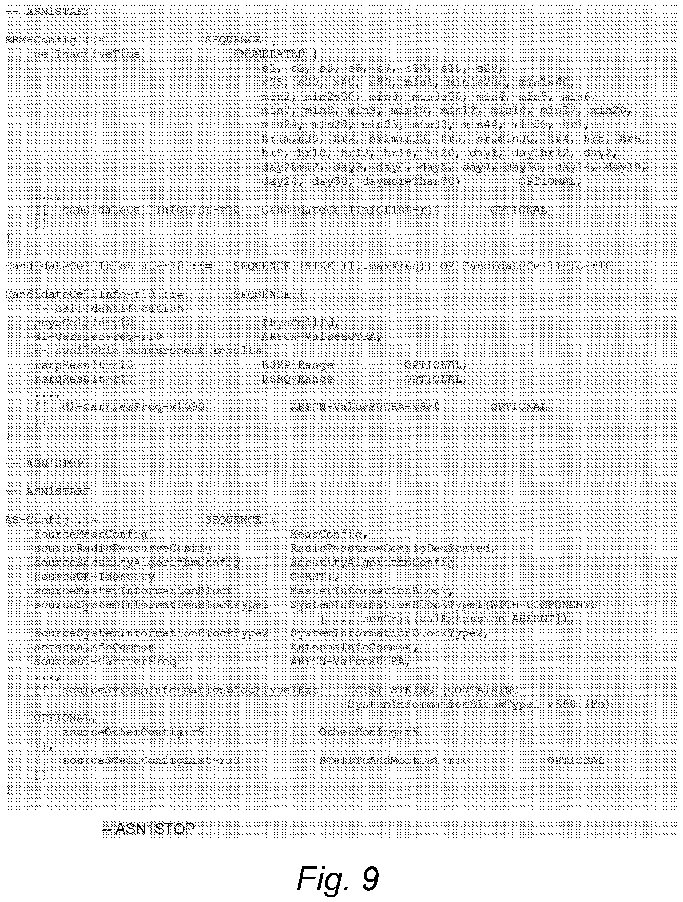

Within the message in Figure 8, we highlight the IE RRM-Config in Figure 9, comprising information about UE specific RRM information before the handover which can be utilized by target eNB, such as Reference Signal Received Power/ Reference Signal Received Quality, RSRP/RSRQ, measurement range and thresholds.

Also, the as-Config IE comprises information such as the Measurement Configuration used for the handover trigger.

One can notice that there are no details about the measurements or mobility events which triggered the handover.

### OAM Architecture

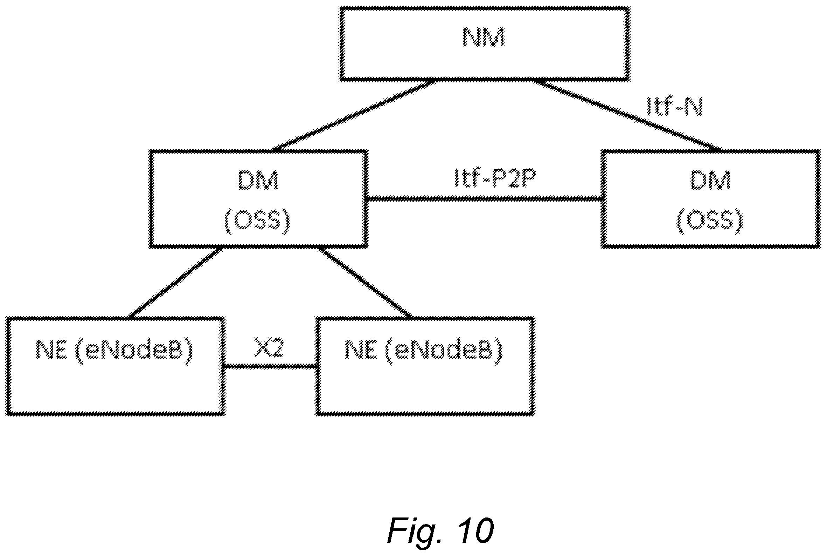

For a better understanding, an example of a management system will now be described briefly with reference to the schematic example of Figure 10. The Node Elements, NE, also referred to as eNodeBs, are managed by a Domain Manager DM, also referred to as an Operation and Support System, OSS. One or more DMs may further be managed by a Network Manager, NM. Two NEs are typically interfaced by X2, whereas the interface between two DMs is typically referred to as Itf-P2P. The management system may configure the network elements, as well as receive observations associated to features in the network elements. For example, DM observes and configures NEs, while NM observes and configures DM, as well as NE via DM.

It is possible that any function that automatically optimizes NE parameters can in principle be executed in the NE, DM, or the NMS. Such features are referred to as Self-Organizing Network, SON, features.

A problem with respect to mobility and handover is that UE grouping brings challenges to many functions, including for example load balancing. By way of example, the existing procedure for negotiating mobility parameters is quite generic and limited. With limited information on relevant mobility parameters, there is a risk for so-called ping-pong effects with multiple handovers back and forth between the source network node and the target network node. For example, this may be due to inconsistency of mobility thresholds between the source and target network nodes and/or different grouping criteria.

WO 2009/155992 relates to mobility management, and specifically a method that involves obtaining mobility management properties for a plurality of terminals served by an access node, as well as grouping the plurality of terminals into groups based on correlating the obtained mobility management properties of the plurality of terminals. Decisions on the necessity for a handover are taken per group and then forwarded per group to a target access node.

The 3GPP Draft "Mobility Setting Change procedure and misalignment of configuration", R3-122502 relates to a way to extend the mobility settings change procedure with a format that emphasizes that the requesting eNB executes the informed change of the handover trigger due to suspected discrepancy of mobility settings.

### SUMMARY

It is a general object to improve handover procedures in wireless communication networks.

In particular, it is desirable to provide methods for participating in a handover procedure, and corresponding network nodes and/or base stations such as source base stations and target base stations.

These and other objects are met by embodiments of the proposed technology as defined by the independent claims 1, 6, 7 and 12 and their dependent claims.

According to a first aspect, there is provided a method performed by a target network node for participating in a handover procedure of User Equipment, UE, from a source network node to the target network node. The method basically comprises the steps of:
- starting a validity timer at a time instant associated with the handover procedure of the UE; and
- maintaining, while the validity timer is running, a mobility configuration of the UE defined by the source network node.

According to a second aspect, there is provided a method performed by a source network node for participating in a handover procedure of User Equipment, UE, from the source network node to the target network node. The method basically comprises the steps of:
- defining a validity time representing the duration of which a mobility configuration of the UE defined by the source network node should be maintained by the target network node; and
- sending the validity time to the target network node for configuring an associated validity timer in the target network node.

According to a third aspect, there is provided a method, in a target base station, for providing a handover procedure for a user equipment. The method comprises:
- receiving, from a source base station, a configuration for the user equipment, where the configuration comprises a group identification for the user equipment which has been assigned by the source base station;
- identifying the user equipment as a member of a group based on the group identification;
- receiving, from the source base station, a core network node or an operation and maintenance system, information related to a triggering of a validity timer;
- initiating the validity timer upon a triggered event associated with the identified group; and
- maintaining a current configuration of the user equipment until an expiration of the validity timer.

According to a fourth aspect, there is provided a method, in a source base station, for providing a handover procedure for a user equipment. The method comprises:
- classifying the user equipment as a member of a group of a plurality of user equipments, where the group is associated with a group identification;
- sending, to a target base station, a configuration for the user equipment, where the configuration comprises the group identification; and
- sending, to the target base station, information related to a triggering of a validity timer for members of the group associated with the group identification.

According to a fifth aspect, there is provided a target base station configured to participate in a handover procedure of User Equipment, UE, from a source base station to the target base station. The target base station is configured to start a validity timer at a time instant associated with the handover procedure of the UE. The target base station 100 is also configured to maintain, while the validity timer is running, a mobility configuration of the UE defined by the source base station.

According to a sixth aspect, there is provided a source base station configured to participate in a handover procedure of User Equipment, UE, from the source base station to a target base station. The source base station is configured to define a validity time representing the duration of which a mobility configuration of the UE defined by the source base station should be maintained by the target base station. The source base station is also configured to send the validity time to the target base station for configuring an associated validity timer in the target base station.

According to a seventh aspect, there is provided a target base station for participating in a handover procedure of User Equipment, UE, from a source base station to the target base station. The target base station comprises:
- a starting module for starting a validity timer at a time instant associated with the handover procedure of the UE; and
- a maintaining module for maintaining, while the validity timer is running, a mobility configuration of the UE defined by the source base station.

According to an eighth aspect, there is provided a source base station for participating in a handover procedure of User Equipment, UE, from the source base station to a target base station. The source base station comprises:
- a definition module for defining a validity time representing the duration of which a mobility configuration of the UE defined by the source base station should be maintained by the target base station; and
- a preparation module for preparing the validity time for transfer to the target base station.

According to a ninth aspect, there is provided a target base station for providing a handover procedure for a user equipment. The target base station comprises radio circuitry configured to receive, from a source base station, a configuration for the user equipment, where the configuration comprises a group identification for the user equipment which has been assigned by the source base station. The target base station also comprises processing circuitry configured to identify the user equipment as a member of a group based on the group identification. The radio circuitry is further configured to receive, from the source base station, a core network node or an operation and maintenance system, information related to a triggering of a validity timer. The processing circuitry is configured to initiate the validity timer upon a triggered event associated with the identified group, and the processing circuitry is further configured to maintain a current configuration of the user equipment until an expiration of the validity timer.

According to a tenth aspect, there is provided a source base station for providing a handover procedure for a user equipment. The source base station comprises processing circuitry configured to classify the user equipment as a member of a group of a plurality of user equipments, where the group is associated with a group identification. The source base station also comprises radio circuitry configured to send, to a target base station, a configuration for the user equipment, where the configuration comprises the group identification. The radio circuitry is further configured to send, information related to a triggering of a validity timer for members of the group associated with the group identification.

According to an eleventh aspect, there is provided a method performed by a source base station for participating in a handover procedure of User Equipment, UE, from the source base station to a target base station. The source base station sends an indication in a handover request to the target base station, and the indication signals at least one of:
- a timer informing the target base station that a mobility policy preventing a handover back to the source base station shall apply to the UE during the time window of the timer; and
- an offset for the recommended mobility thresholds for the UE.

According to a twelfth aspect, there is provided a computer program comprising instructions, which when executed by at least one processor, cause the at least one processor to start a validity timer at a time instant associated with a handover procedure of a UE, and to maintain, while the validity timer is running, a mobility configuration of the UE defined by a source base station.

According to a thirteenth aspect, there is provided a computer program comprising instructions, which when executed by at least one processor, cause the at least one processor to define a validity time representing the duration of which a mobility configuration of a UE defined by a source base station should be maintained by a target base station, and to prepare the validity time for transfer to the target base station.

Embodiments of the proposed technology enables the target network node to maintain a mobility configuration of the source network node while the validity timer is running. After expiration of the validity timer, the target network node may be free to apply its own alternative mobility configuration.

This may reduce the risk for ping-pong handovers back and forth between the source and target network nodes.

This may also enable flexible use of different grouping strategies in different network nodes as part of the overall mobility configurations.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 is a schematic diagram illustrating an example of a problem where UEs that have been handed over are reclassified according to new grouping criteria and may be handed over back to the source node again with the risk of ping-pong handovers.
FIG. 2A is a schematic diagram illustrating an example of a problem where UEs offloaded to a target node belong to different groups, and the target can only negotiate a single threshold using the Mobility Parameter Change procedure, not a threshold per group.
FIG. 2B is a schematic diagram illustrating an example of a configuration that is not possible with the current standards.
FIG. 3 is a schematic diagram illustrating an example of a load curve over time and a load threshold for the X2 Load Exchange procedures for MLB.
FIG. 4 is a schematic diagram illustrating an example of load reporting in an example network.
FIG. 5 is a schematic diagram illustrating an example of MLB execution, including the Mobility Parameter Change procedure.
FIG. 6 is a schematic diagram illustrating an example of a Handover procedure.
FIG. 7 is a schematic diagram illustrating an example of a standardized HANDOVER_REQUEST message.
FIG. 8 is a schematic diagram illustrating an example of a Handover Preparation Information message.
FIG. 9 is a schematic diagram illustrating an example of the RRM-Config and AS-Config information elements.
FIG. 10 is a schematic diagram illustrating an example of a management system architecture.
FIG. 11 is a schematic diagram illustrating an example of a solution currently discussed in 3GPP standardization.
Figure 12A is a schematic flow diagram illustrating an example embodiment.
Figure 12B is a schematic flow diagram illustrating an example of a method performed by a target network node for participating in a handover procedure according to an embodiment.
Figure 13 is a schematic flow diagram illustrating an example of a method performed by a source network node for participating in a handover procedure according to an embodiment.
Figure 14 is a schematic flow diagram illustrating an example of a method, in a target base station, for providing a handover procedure for a user equipment, according to an embodiment.
Figure 15 is a schematic flow diagram illustrating an example of a method, in a source base station, for providing a handover procedure for a user equipment, according to an embodiment.
Figure 16 is a schematic signaling diagram illustrating an example of actions and/or signaling between a source network node and a target network node according to an embodiment.
FIG. 17 is a schematic diagram illustrating an example of an embodiment in which UEs from different groups are handed over at the same time.
FIG. 18 is a schematic diagram illustrating an example of a situation after expiration of the validity time when the target node is free to re-configure the UEs.
FIG. 19 is a schematic diagram illustrating an example of a situation when UEs are handed over, and the target node recognizes to which group IDs the different UEs belong and reconfigures the UEs accordingly to values of a list of mobility thresholds per group ID.
FIG. 20 is a schematic diagram illustrating an example of a situation where mobility parameters negotiated by a Mobility Change Request procedure should be applied to a group of UEs for the duration of a validity timer.
FIG. 21 is a schematic block diagram illustrating an example of a network node such as a target base station or a source base station according to an embodiment.
FIG. 22 is a schematic block diagram illustrating an example of a function module implementation of a target base station according to an embodiment.
FIG. 23 is a schematic block diagram illustrating an example of a function module implementation of a source base station according to an embodiment.

### DETAILED DESCRIPTION

Throughout the drawings, the same reference designations are used for similar or corresponding elements.

As used herein, the non-limiting term "User Equipment" may refer to a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPAD, customer premises equipment, CPE, laptop embedded equipment, LEE, laptop mounted equipment, LME, USB dongle, a portable electronic radio communication device, a sensor device equipped with radio communication capabilities or the like. In particular, the term "UE" should be interpreted as a non-limiting term comprising any type of wireless device communicating with a radio network node in a cellular or mobile communication system or any device equipped with radio circuitry for wireless communication according to any relevant standard for communication within a cellular or mobile communication system.

As used herein, the non-limiting term "network node" may refer to base stations, network control nodes such as network controllers, radio network controllers, base station controllers, and the like. In particular, the term "base station" may encompass different types of radio base stations including standardized base stations such as Node Bs, or evolved Node Bs, eNBs, and also macro/micro/pico radio base stations, home base stations, also known as femto base stations, relay nodes, repeaters, radio access points, base transceiver stations, BTSs, and even radio control nodes controlling one or more Remote Radio Units, RRUs, or the like.

In the following, the terms target network node, target node, target and target base station may be used interchangeably. The same applies for the terms source network node, source node, source, and source base station.

For a better understanding of the proposed technology, it may be useful to begin with a brief overview and analysis of the prior art.

A Reel.12 study item on "Next-Generation SON for UTRA and LTE", see reference [1], comprises a section entitled "SON for UE types" proposing to investigate if SON features specified so far could benefit from knowledge about UE types.

As mentioned, Mobility Load Balance is one of the candidate use cases that might benefit from UE grouping strategies, i.e. a source cell decide to offload a group of users based on some criteria to a target cell whose load information is known.

Currently, 3GPP specifies the following components for the MLB solution:
- Load reporting; not the same for intra-LTE and inter-RAT in terms of: Load measures, Reporting Procedures;
- Load balancing action based on handovers;
- Adapting HO/CR configuration so that the load remains balanced.

As recognized by the inventors, UE grouping brings challenges to all the three functions, but according to some of the example embodiments, we focus on the adaptation of HO/CR configuration so that the load remains balanced.

In the current standards, this adaptation is performed via the X2AP Mobility Change Request procedure [2, 3], where the source and target cells negotiate mobility parameters.

However, the procedure is quite generic and only a single value can be transmitted from the source to the target, which in turn can be accepted or reject.

Thus, in the current standards, even if the source node performs the load balance actions based on any group criteria, the target cannot perform any UE differentiation and thresholds would be applied similarly to all the UEs covered by the cell. This may lead to different problems, e.g. a handover executed by a load balance action followed by a handover back from the target to the source, due to inconsistency of mobility thresholds. In the extreme case, this may lead to ping-pongs, several handovers back and forth.

Consider the following example scenario. A source, eNB-s, wants to offload a group of users based on its own criteria, e.g. low speed UEs or UEs with real-time bearers, or any other grouping criteria. Assuming the source, eNB-s, has chosen a target, eNB-t, the offloading may be executed with handovers after a Mobility Parameter Change procedure, see reference [3], where the source and target negotiate mobility parameters such as thresholds, e.g. HO/CR margins. This procedure is used in order to allow the offloaded UEs to keep connected to their new eNB-t.

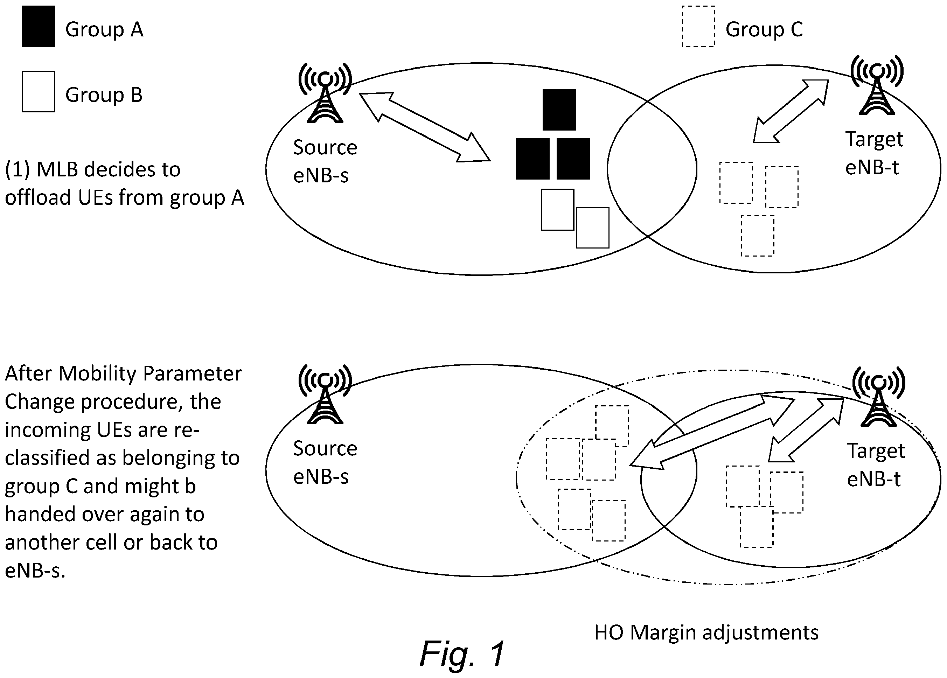

For example, a first problem arises when the source and target nodes have different grouping criteria, which is likely to be the case in a multi-vendor scenario. Let us assume that the source eNB-s defines two groups A and B, while the target eNB-t defines a single group C, as shown in Figure 1. During an MLB action at the source eNB-s, the UEs belonging to groups A and/or B are offloaded to the target eNB-t and new mobility settings are applied to them, e.g. via RRC Reconfiguration. Once these UEs are connected to the target eNB-t, they could be grouped according to new criteria of eNB-t and, as a response to this new grouping be eventually handed over back to the source node eNB-s. In extreme cases, this may lead to ping-pong i.e. several handovers back and forth.

MLB actions may offload UEs belonging to the same group or from different groups, depending on the notion of UE grouping at the source, eNB-s. The problem just described may occur in any of these scenarios.

A second problem may arise particularly when the source, eNB-s, decides to offload UEs belonging to different groups during the same MLB action. Before a load balancing action involving handovers is taken, the X2 Mobility Parameter Change procedure may run. By means of the MOBILITY CHANGE REQUEST/RESPONSE eNBs negotiate new mobility thresholds. However, these thresholds, according to current standardized procedures, are generic.

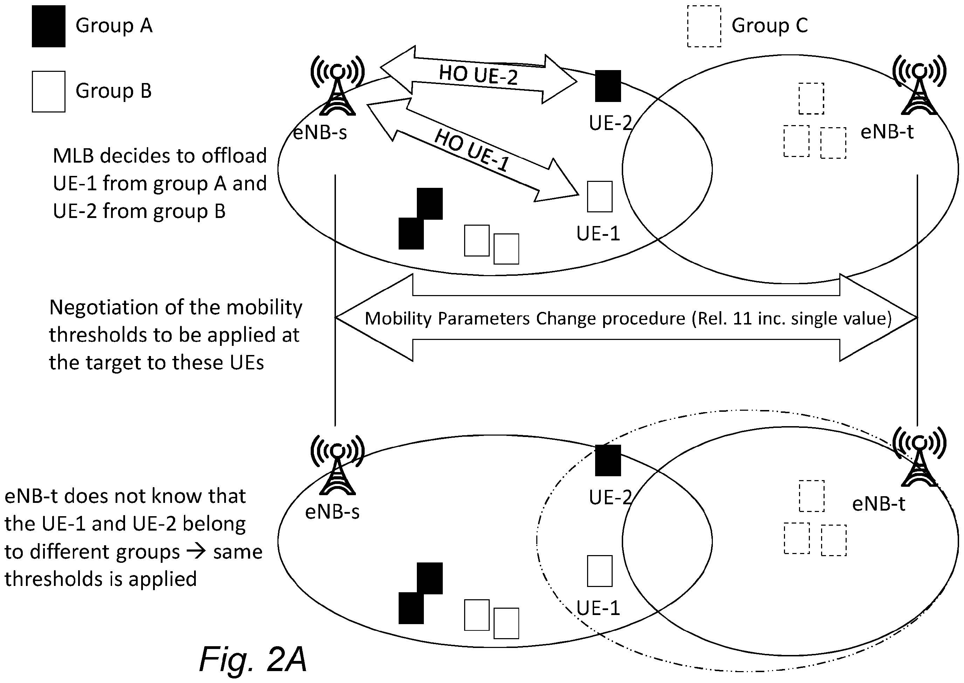

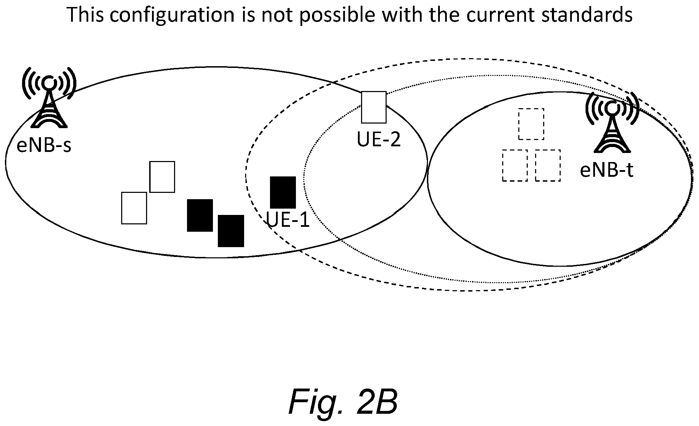

However, since the source, eNB-s, offloads UEs from different groups at the same action, it may also want to recommend the target, eNB-t, to apply different mobility thresholds to the UEs according to their group. With the current standards, this recommendation per group is not possible. This is shown in Figure 2-A and Figure 2-B.

In order to solve these and other related problems, enhancement(s) to the handover procedure is/are proposed in example embodiments. For example, this may include use and/or signalling of additional information in order to support the UE differentiation at the target cell in terms of mobility parameters.

In the current standards there is no solution for the Mobility Parameter Change procedure to support UE grouping strategies for MLB. On the other hand, some discussions in 3GPP points to a solution of *standard-defined grouping strategies* which relies on the following principle:
*There would be grouping strategies for MLB defined by 3GPP. This means that nodes from all the vendors have to agree upon the grouping strategies in 3GPP which are relevant to load balance performance.*

Following this principle, the existing solution under discussion for the *Mobility Parameter Change* procedure would be the following:
1- The source eNB-s has a set of groups {1, 2, ...,N} where UEs are classified. When overloading is detected, the MLB function decides which group will be handed over to a target, eNB-t, which also have the same groups {1, 2, ...,N}. Let us assume that source, eNB-s, decides to offload the n-th group.
2- During the Mobility Parameter Change procedure, instead of informing the target, eNB-t, a single parameter, it informs parameter settings per groups or only the new setting for the n-th group.
3- Since the groups are the same in both nodes, the target, eNB-t, may apply the new settings to UEs belonging to the n-th group.

This solution, however, has the following problems:
1- The solution limits the potential for new grouping strategies in the future, locking strategies which might be considered important in further standard enhancements. For example, if it is decided that UEs should be grouped only based on speed and UE capabilities, there will not be any chance in the future to add a new grouping criteria, e.g. based on bearer type or user behavior using data from OSS/BSS.
2- There is a clear lack of flexibility for implementation-differentiation of MLB strategies. There will be less potential for implementation differentiation when it comes to load balancing based on UE grouping, since all the vendors would implement the same grouping criteria.

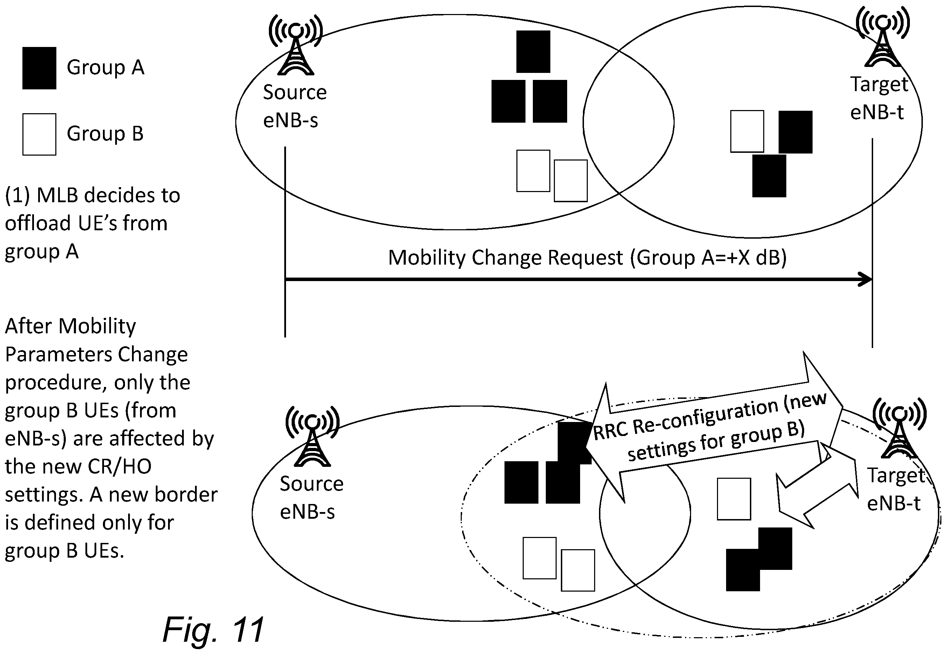

The solution currently discussed in 3GPP standardization is schematically illustrated in Figure 11.

The description of problems, scenarios and solutions refer only to a particular instance of the problem occurrence, i.e. the case of mobility load balancing between cells such as LTE cells. This shall not restrict the use of the principles behind the proposed solutions to other scenarios involving different source or target RATs.

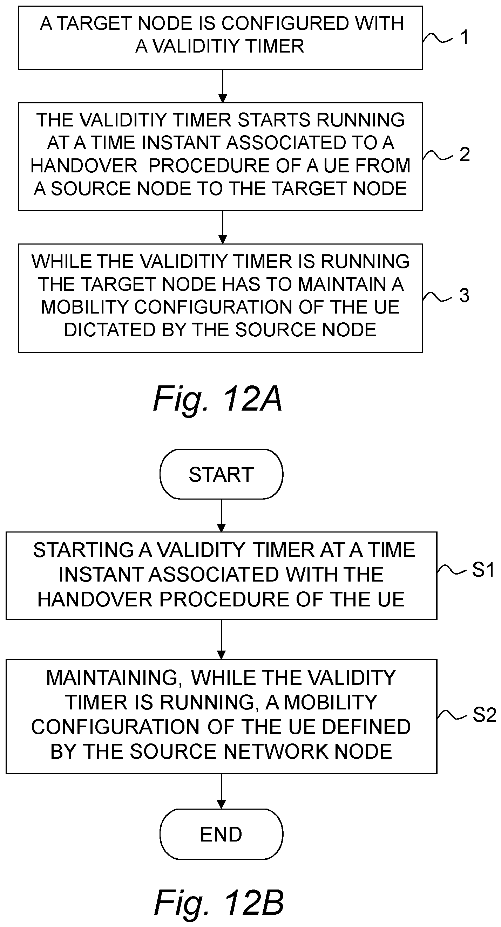

Figure 12A is a schematic flow diagram illustrating an example embodiment.

This example embodiment is based on a validity timer having an associated validity time window. In action 1, a target node is configured with a validity timer. In action 2, the validity timer starts running at a time instant associated to a handover procedure of a UE from a source node to the target node. In action 3, while the timer is running, the target node has to maintain a mobility configuration of the UE defined by the source node. After the validity time, the target node is free to apply alternative mobility configurations.

In this particular example, each node will have the flexibility to apply its own UE grouping criteria. In a sense, the node coordination is achieved by a time-based master-slave scheme. The source node can be regarded as the master and the target node can be regarded as the slave, during the validity time window. The node coordination is typically more critical in a multi-vendor scenario.

Figure 12B is a schematic flow diagram illustrating an example of a method performed by a target network node for participating in a handover procedure of User Equipment, UE, from a source network node to the target network node according to an embodiment.

From the perspective of the target network node, the method comprises the step S1 of starting a validity timer at a time instant associated with the handover procedure of the UE. The method further comprises the step S2 of maintaining, while the validity timer is running, a mobility configuration of the UE defined by the source network node.

The validity timer is associated with a validity time, and the validity time may for example be associated to an individual UE or to a group of UEs. This allows a differentiation, per UE or per group, of how long time the mobility configuration defined by the source node should be maintained by the target network node before an alternative mobility configuration can be applied.

By way of example, the target network node may receive the validity time associated with the validity timer, or the target network node may be pre-configured with the validity time associated with the validity timer, or the target network node may establish the validity time associated with the validity timer.

For example, the target network node may receive, from the source network node, at least one parameter for defining at least part of the mobility configuration of the UE. The mobility configuration of the UE normally comprises at least one mobility parameter for the handover procedure.

In a particular example, the target network node receives an offset value from the source network node, and applies the offset value in combination with a threshold value to define a mobility threshold. The mobility threshold is typically part of the mobility configuration of the UE, wherein the offset is configured per UE or configured for a group of UEs. This allows a differentiation, per UE or per group, of the mobility threshold to be used for the handover decision.

As an example, the target network node may receive the offset value and a validity time associated with the validity timer from the source network node.

In another particular example, the target network node receives a group identification, group ID, from the source network node, and retrieves, based on the received group ID, a mobility threshold from a list of mobility thresholds per group ID for the source network node, where the mobility threshold is part of the mobility configuration of the UE.

As an example, the target network node may receive the group ID and a validity time associated with the validity timer from the source network node.

In yet another example, the target network node receives a triggering condition for handover from the source network node, wherein the triggering condition is part of the mobility configuration of the UE.

By way of example, the target network node may receive the parameter(s) for defining at least part of the mobility configuration of the UE from the source network node in a handover message during the handover execution phase.

Examples of such a handover message include:
- X2 HANDOVER REQUEST message,
- S1 HANDOVER REQUIRED/REQUEST message,
- RANAP RELOCATION REQUIRED/REQUEST message.

Furthermore, the use of the validity timer may optionally be associated to the handover cause.

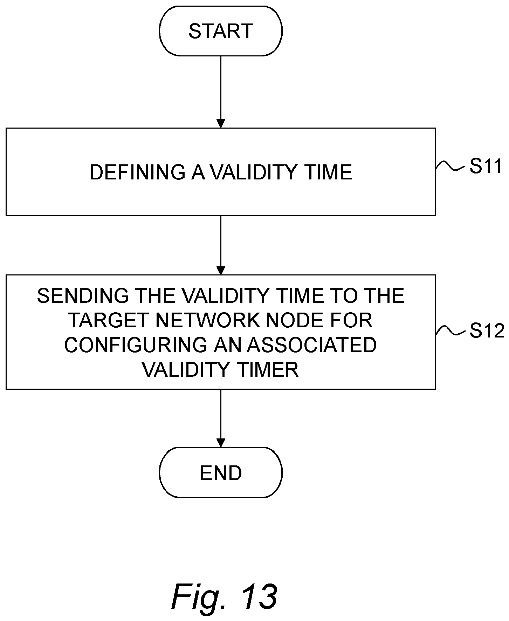

Figure 13 is a schematic flow diagram illustrating an example of a method performed by a source network node for participating in a handover procedure of User Equipment, UE, from the source network node to the target network node according to an embodiment.

From the perspective of the source network node, the method comprises the step of defining a validity time representing the duration of which a mobility configuration of the UE defined by the source network node should be maintained by the target network node. The method further comprises the step of sending the validity time to the target network node for configuring an associated validity timer in the target network node.

For example, the source network node may send, to the target network node, at least one parameter for defining at least part of the mobility configuration of the UE.

In a particular example, the source network node sends an offset value to the target network node for defining, in combination with a threshold value, a mobility threshold as part of the mobility configuration of the UE, wherein the offset is configured per UE or configured for a group of UEs.

In another example, the source network node sends a group identification, group ID, to the target network node, for enabling definition of a mobility threshold in the target network node as part of the mobility configuration of the UE.

In yet another example, the source network node sends a triggering condition for handover to the target network node as part of the mobility configuration of the UE.

Preferably, the source network node may send the parameter(s) for defining at least part of the mobility configuration of the UE to the target network node in a handover message during the handover execution phase.

Examples of such a handover message include:
- X2 HANDOVER REQUEST message,
- S1 HANDOVER REQUIRED/REQUEST message,
- RANAP RELOCATION REQUIRED/REQUEST message.

In a particular example, from the perspective of the source base station, the proposed technology can be regarded as a method performed by the source base station for participating in a handover procedure of User Equipment, UE, from the source base station to a target base station, in which the source base station sends an indication in a handover request to the target base station. Preferably, the indication signals at least one of:
- a timer informing the target base station that a mobility policy preventing a handover back to the source base station shall apply to the UE during the time window of the timer; and
- an offset for the recommended mobility thresholds for the UE.

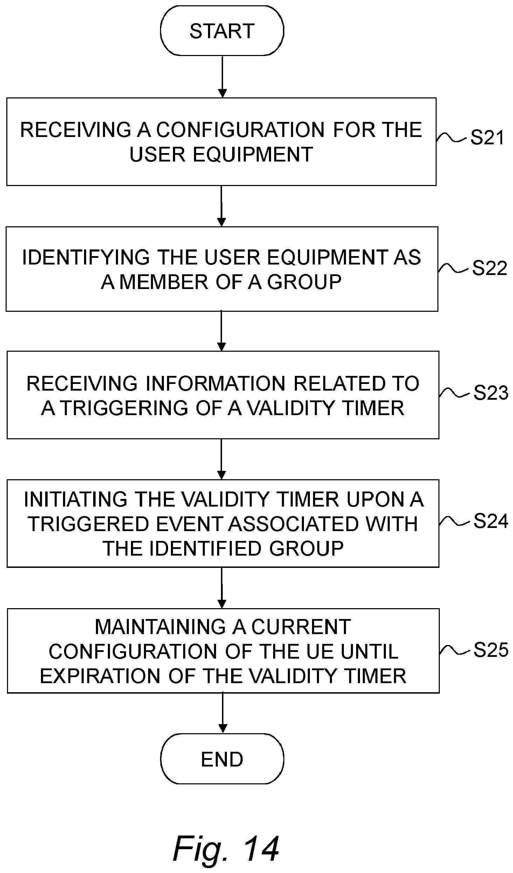

Figure 14 is a schematic flow diagram illustrating an example of a method, in a target base station, for providing a handover procedure for a user equipment, according to an embodiment. The method comprises:
- receiving in step S21, from a source base station, a configuration for the user equipment, said configuration comprising a group identification for the user equipment which has been assigned by the source base station;
- identifying in step S22 the user equipment as a member of a group based on the group identification;
- receiving in step S23, from the source base station, a core network node or an operation and maintenance system, information related to a triggering of a validity timer;
- initiating in step S24 the validity timer upon a triggered event associated with the identified group; and
- maintaining in step S25 a current configuration of the user equipment until an expiration of the validity timer.

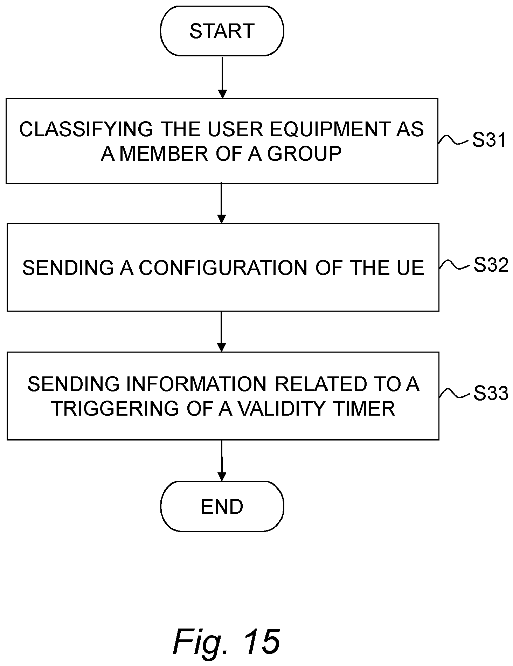

Figure 15 is a schematic flow diagram illustrating an example of a method, in a source base station, for providing a handover procedure for a user equipment, according to an embodiment. The method comprises:
- classifying in step S31 the user equipment as a member of a group of a plurality of user equipments, said group being associated with a group identification;
- sending in step S32, to a target base station, a configuration for the user equipment, said configuration comprising the group identification; and
- sending in step S33, to the target base station, information related to a triggering of a validity timer for members of the group associated with the group identification.

In a particular example, the target node is provided information that the UE has been pre-classified by the source base station as a member of a group and that this information is coupled with a validity time.

Alternatively, the information related to a triggering of a validity timer may be provided by the core network or an operation and maintenance system.

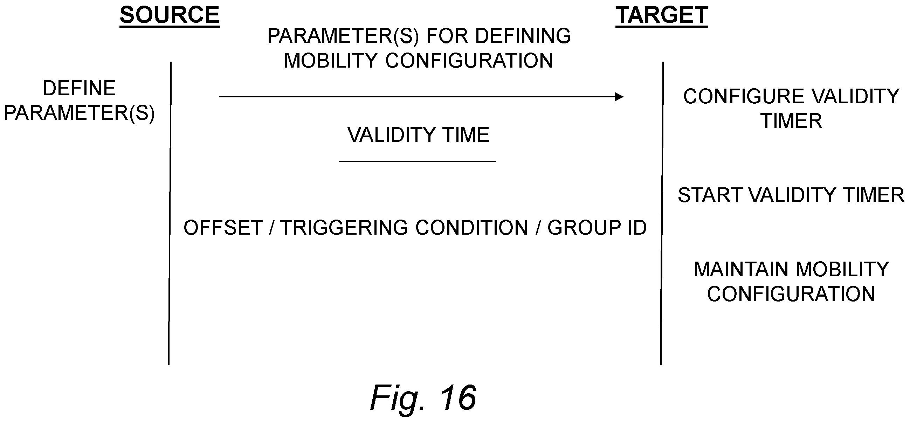

Figure 16 is a schematic signaling diagram illustrating an example of actions and/or signaling between a source network node and a target network node according to an embodiment.

In this example, the target configures a validity timer. This may be a pre-configuration, or a configuration in response to a received validity time or a validity time established by the target.

The target starts the validity timer at handover, e.g. at a time instant associated with a handover procedure.

The target maintains a mobility configuration defined by the source during the validity time, i.e. while the timer is running.

The source may define one or more parameters for defining the mobility configuration of the UE, and send the parameter(s) to the target. The parameter(s) for defining a mobility configuration of the UE may include one or more of the following non-limiting examples, a validity time, an offset, a triggering condition, a group ID, and a mobility threshold.

In the following, further non-limiting examples will be described.

### Validity timer aspects

The target node may be configured with a time window T0, called validity time. The configuration could be from the source node, from a core network node, from the OAM system, from any other network node, or pre-configured. The time T0 may also be associated to a group at the source node or to individual UEs.

A timer is triggered at the target node at a start time instant. Examples of such start instant comprises when the handover is confirmed:
- when the UE receives the RRC_{_}RECONFIGURATION comprising the HO Command,
- when the target node receives the handover request,
- when the target node has signaled handover request ack,
- when the target node has established an RRC connection with the UE,
- when the target node has established all RBs with the UE, and
- when the path switch to the core network is completed.

During this validity time, the UE shall be configured with parameters dictated by the source node. After the validity time T0, the target node is free to apply to these UEs new mobility thresholds accordingly to its own algorithm. The time T0 could be optimized per group or individual UE. Depending on the notion of group applied at the source node, different cases are covered by the example embodiments.

### Example case 1 - UEs from different groups being handed over at the same time.

In a first example embodiment, the source node may send to the target node, during the HO execution phase (e.g. via HO_REQUEST), the validity time window T0 and an offset, *per_ue_offset,* for the mobility thresholds recommended by the source to that UE. These offsets could be used by the target in combination of a mobility setting, *mob*_*thresh*, e.g. pre-configured via OSS for that neighbor relation or negotiated via MOBILITY CHANGE REQUEST.

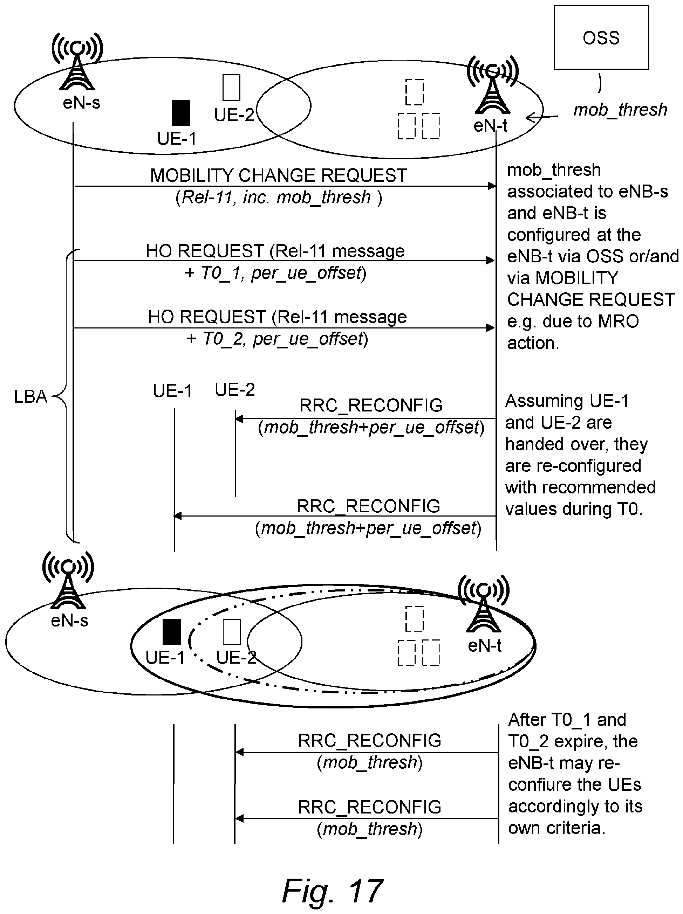

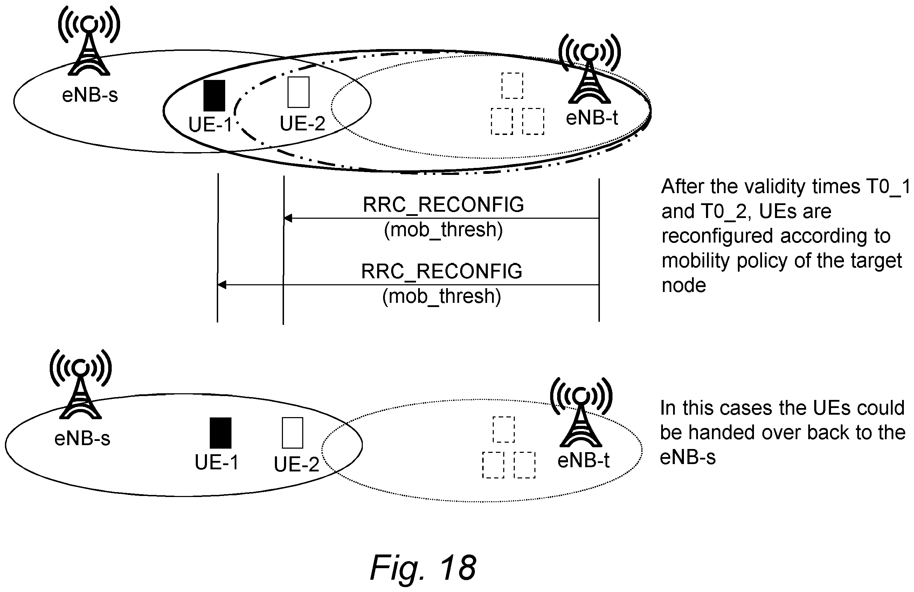

After the handover, the UE is configured at the target node with mobility threshold *per_ue_offset*+ *mob_thresh.* This is schematically illustrated in Figure 17. The main advantage of this embodiment involves the possibility that different UEs (or groups) being handed over may be configured with different thresholds, solving the second problem previously mentioned. When the timer expires, after the validity time window T0, the target node is free to re-configure the UEs according to its own UE-based or grouping algorithm. This is schematically shown in Figure 18.

In a second example embodiment, the source node may send to the target node, during the HO execution phase (e.g. via HO_REQUEST), the validity time window T0 and a group ID defined by the source cell associated to a UE (or a group of UEs).

It is assumed in this second embodiment that the target node has pre-configured lists of group IDs and mobility thresholds associated to each potential neighbor node. These lists may be configured via OSS or any inter-node procedure such as the mobility parameter change X2AP procedure. These lists of thresholds per group ID per neighbor may also be updated via OSS or any inter-node procedure such as the mobility parameter change procedure via X2AP.

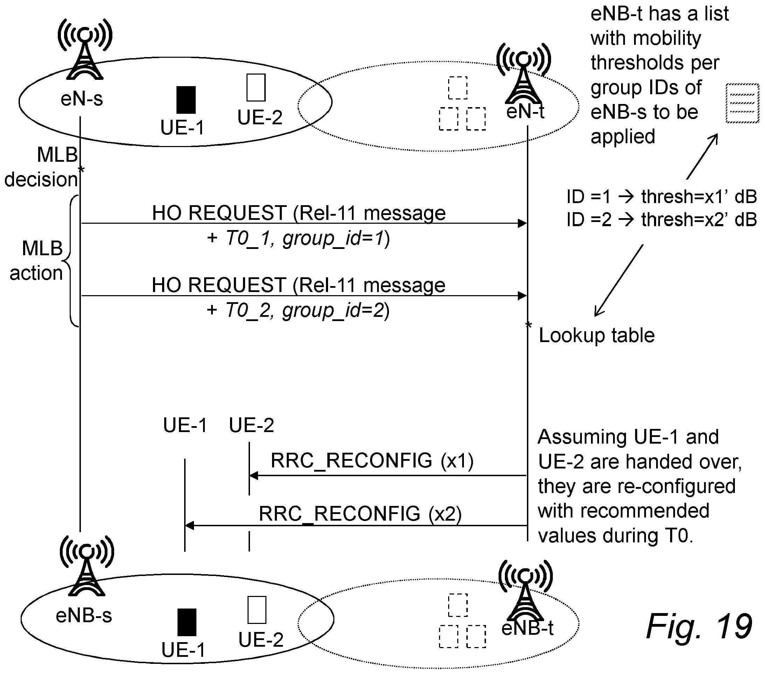

When the UEs are handed over, the target node recognizes to which group IDs the different UEs belong and reconfigures the UEs accordingly to the values of the list of mobility thresholds per group ID for that specific source. This is schematically shown in Figure 19.

In this figure eNB-t is initially configured with threshold X1 for Group ID = 1 and threshold X2 for Group ID = 2. When the HANDOVER REQUEST is received, pointing at a given Group ID, eNB-t is able to understand which thresholds x1' and x2' it will have to apply to such group for the timer specified in the HANDOVER REQUEST. The thresholds could also have been updated via OSS or mobility change parameter procedure, however, it is worth mentioning that the handover and mobility parameter change procedures remain independent when it comes to the MLB action.

In this second embodiment, no delta thresholds or offsets have to be carried by HO messages.

### Example case 2 - The source always handover UEs from the same group.

This is a specific case derived from case 1, where all the UEs being handed over in a given moment from the source to the target nodes belong to a certain group according to some criteria defined by the source node.

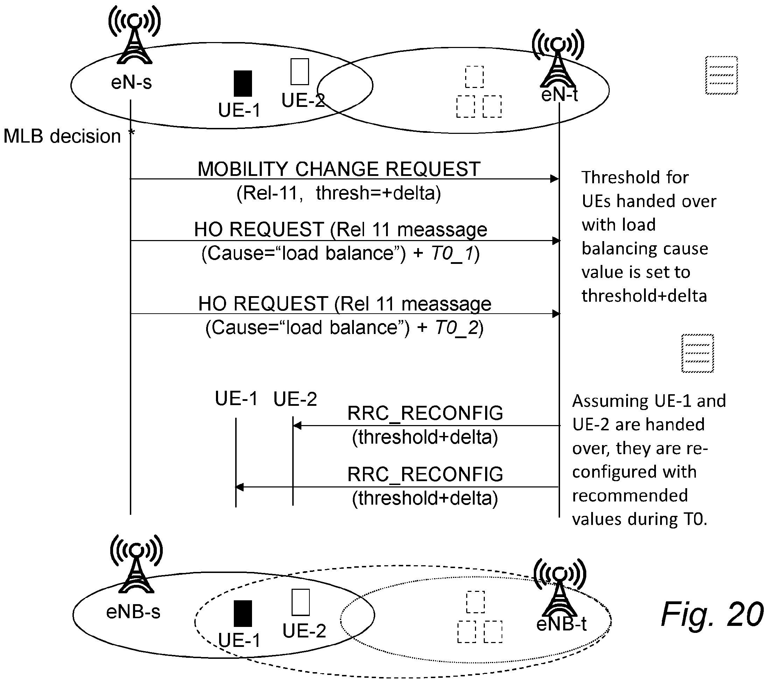

In a first example embodiment, the HO REQUEST sent from the source to target, during MLB execution comprises the validity time T0. A Mobility Change Request is sent, before the handover procedures for the group are started, from the source to the target with a single delta or offset associated to the group which is being handed over. Then, in this case, the timer is applied to all the UEs being handed over from the source cell with the Handover cause = load balance. Namely, the handover procedures marked with cause value "load balance" or "load balancing" are also enhanced with transmission of a timer. For the duration of this timer the mobility parameters negotiated by the previous Mobility Change Request procedure should be applied to the group of UEs handed over from source to target. This is schematically illustrated in Figure 20.

### Example - Triggering condition signaling

The source node normally provides the RRC UE context to the target node as part of the handover. This context comprises measurement report configurations of the UE, and the handover decision may be triggered by one or more measurement reports. A measurement report is associated to one or more report triggering events. Therefore, the actual event triggering the handover can be different for different UEs.

In one example embodiment, the source node indicates the triggering condition that triggered the handover, to the target node, and the validity timer only concerns the triggering condition being maintained.

In another example embodiment, a triggering condition is associated to a validity timer, and there are two or more validity timers defined, each with associated triggering conditions.

### Example - Handover Cause Aspects

The use of a validity timer can also be associated to the handover cause.

In one example embodiment, the validity timer is only associated to UEs with one handover cause.

In another example embodiment, the validity timer is only associated to UEs with a handover cause in a specific set of handover causes.
In yet another example embodiment, there are multiple validity timers defined, each for a set of handover causes.

### Message Modification Examples

An example of the HANDOVER REQUEST message with the new IEs, for example used in Figure 17 and 19 is shown in the Table below:

| **Examples of handover causes [3GPP TS 36.423] used over X2 compriseIE/Group Name** | **Presence** | **Range** | **IE Type and Reference** | **Semantics Description** |
|---|---|---|---|---|
| CHOICE *Cause Group* | M | | | |
| *>Radio Network Layer* | | | | |
| >>Radio Network Layer Cause | M | | ENUMERATED ( Handover Desirable for Radio Reasons, Time Critical Handover, Resource Optimisation Handover, Reduce Load in Serving Cell, Partial Handover, Unknown New eNB UE X2AP ID, Unknown Old eNB UE X2AP ID, Unknown Pair of UE X2AP ID, HO Target not Allowed, TX2_{RELOCoverall} Expiry, T_{RELOCprep} Expiry, Cell not Available, No Radio Resources Available in Target Cell, Invalid MME Group ID, Unknown MME Code, Encryption And/Or Integrity Protection Algorithms Not Supported, ReportCharacteristicsEmpty, NoReportPeriodicity, ExistingMeasurementID, Unknown eNB Measurement ID, Measurement Temporarily not Available, Unspecified, ..., Load Balancing, Handover Optimisation, Value out of allowed range, Multiple E-RAB ID instances, Switch Off Ongoing, Not supported QCI value, Measurement not supported for the object ) | |
| *>Transport Layer* | | | | |
| >>Transport Layer Cause | M | | ENUMERATED (Transport Resource Unavailable, Unspecified, ...) | |
| *>Protocol* | | | | |
| >>Protocol Cause | M | | ENUMERATED (Transfer Syntax Error, Abstract Syntax Error (Reject), Abstract Syntax Error (Ignore and Notify), Message not Compatible with Receiver State, Semantic Error, Unspecified, Abstract Syntax Error (Falsely Constructed Message),...) | |
| *>Misc* | | | | |
| >>Miscellaneous Cause | M | | ENUMERATED (Control Processing Overload, Hardware Failure, O&M Intervention, Not enough User Plane Processing Resources, Unspecified,...) | |

**Table: Example of Enhanced X2: HANDOVER REQUEST message**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Old eNB UE X2AP ID | M | | eNB UE X2AP ID 9.2.24 | Allocated at the source eNB | YES | reject |
| Cause | M | | 9.2.6 | | YES | ignore |
| Target Cell ID | M | | ECGI 9.2.14 | | YES | reject |
| GUMMEI | M | | 9.2.16 | | YES | reject |
| **UE Context Information** | | *1* | | | YES | reject |
| >MME UE S1AP ID | M | | INTEGER (0..2³²-1) | MME UE S1AP ID allocated at the MME | - | - |
| >UE Security Capabilities | M | | 9.2.29 | | - | - |
| >AS Security Information | M | | 9.2.30 | | - | - |
| >UE Aggregate Maximum Bit Rate | M | | 9.2.12 | | - | - |
| >Subscriber Profile ID for RAT/Frequency priority | O | | 9.2.25 | | - | - |
| **>E-RABs To Be Setup List** | | *1* | | | - | - |
| **>>E-RABs To Be Setup Item** | | *1* .. *<maxnoof Bearers*> | | | EACH | ignore |
| >>>E-RAB ID | M | | 9.2.23 | | - | - |
| >>>E-RAB Level QoS Parameters | M | | 9.2.9 | Comprises necessary QoS parameters | - | - |
| >>>DL Forwarding | O | | 9.2.5 | | - | - |
| >>>UL GTP Tunnel Endpoint | M | | GTP Tunnel Endpoint 9.2.1 | SGW endpoint of the S1 transport bearer. For delivery of UL PDUs. | - | - |
| >RRC Context | M | | OCTET STRING | Comprises the RRC Handover Preparation Information message as defined in subclause 10.2.2 of TS 36.331 [9] | - | - |
| >Handover Restriction List | O | | 9.2.3 | | - | - |
| >Location Reporting Information | O | | 9.2.21 | Comprises the necessary parameters for location reporting | - | - |
| >Management Based MDT Allowed | O | | 9.2.59 | | YES | ignore |
| **>Management Based MDT PLMN List** | O | | MDT PLMN List 9.2.64 | | YES | ignore |
| UE History Information | M | | 9.2.38 | Same definition as in TS 36.413 [4] | YES | ignore |
| Trace Activation | O | | 9.2.2 | | YES | ignore |
| SRVCC Operation Possible | O | | 9.2.33 | | YES | ignore |
| CSG Membership Status | O | | 9.2.52 | | YES | reject |
| Mobility Information | O | | BIT STRING (SIZE (32)) | Information related to the handover; the source eNB provides it in order to enable later analysis of the conditions that led to a wrong HO. | YES | ignore |
| Group ID | O | | INTEGER (1..256,...) | Identifies a group of UEs as defined by eNB1 | - | - |
| Handover Thresholod | O | | INTEGER (-20..20) | Threshold applied for triggering the handover. The actual value is IE value * 0.5 dB. | - | - |
| Validity Time | O | | INTEGER (1..4095,...) | Time in seconds for which a mobility policy shall apply to the UE | - | - |

In the HANDOVER REQUEST message, one or more of the following IEs may be added:
- Group ID: An identified indicating that the UE belongs to a group constituted by the sending eNB.
- Handover Threshold: The threshold applied by the source eNB on target or source signal strength in order to trigger the handover.
- Validity Time: the time for the duration of which the mobility criteria applied by the source eNB at the time of handover should be respected in the target eNB.

It shall be noted that the same enhancements could be applied with the same meaning/application to any mobility message on any other interface or technology. For example, the same changes could be applied to S1: HANDOVER REQUIRED/REQUEST messages, RANAP: RELOCATION REQUIRED/REQUEST messages and more.

It should also be pointed out that the handover preparation response messages could be enhanced with a new timer, which could represent a new value of the Validity Timer IE set by the target eNB. Reception of this new Validity Timer IE from target eNB, e.g. in the X2: HANDOVER REQUEST ACKNOWLEDGE or S1: HANDOVER REQUEST ACKNOWLEDGE/COMMAND, would signify that the Validity Time received by target eNB is not acceptable and instead a new Validity Timer has been established by target eNB. This exemplifies that the validity time window of the validity timer may ultimately be established by the target node.

The example embodiments address a solution which brings some flexibility to implementation of load balancing algorithms to apply different grouping strategy, depending on the nodes. Not only each vendor could apply their own criteria, but eventually the same vendor could apply different grouping criteria in different parts of the network.

Node interoperability is guaranteed and a future-poof standard solution.

According to some of the example embodiment, the source may take a decision to apply certain mobility parameters triggering mobility for a group of UEs to a target cell. This decision is in the form of handover signaling and it can be accepted or rejected by the target. According to some of the example embodiments, the decision is taken at the time of handover preparation and execution.

It will be appreciated that the methods and devices described herein can be combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions, procedures, modules and/or blocks described herein may be implemented in software such as a computer program for execution by suitable processing circuitry such as one or more processors or processing units.

The flow diagram or diagrams presented herein may therefore be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

Examples of processing circuitry includes, but is not limited to, one or more microprocessors, one or more Digital Signal Processors, DSPs, one or more Central Processing Units, CPUs, video acceleration hardware, and/or any suitable programmable logic circuitry such as one or more Field Programmable Gate Arrays, FPGAs, or one or more Programmable Logic Controllers, PLCs.

It should also be understood that it may be possible to re-use the general processing capabilities of any conventional device or unit in which the proposed technology is implemented. It may also be possible to re-use existing software, e.g. by reprogramming of the existing software or by adding new software components.

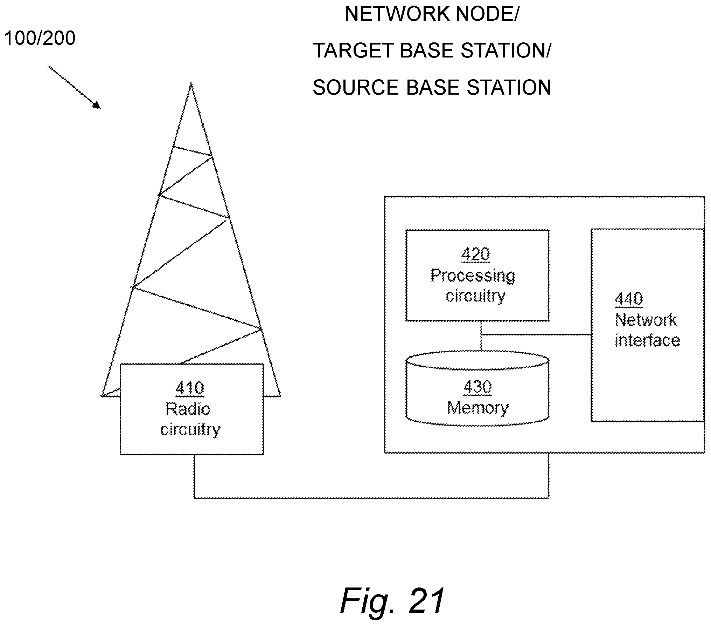

Figure 21 illustrates an example node configuration of a base station which may perform some of the example embodiments described herein. It should be appreciated that Figure 21 provides an example configuration of a network node which may be applied to both a target base station 100 and a source base station 200. The base station 100/200 may comprise radio circuitry or a communication port 410 that may be configured to receive and/or transmit communication data, instructions, and/or messages. It should be appreciated that the radio circuitry or communication port 410 may be comprised as any number of transceiving, receiving, and/or transmitting units or circuitry. It should further be appreciated that the radio circuitry or communication 410 may be in the form of any input or output communications port known in the art. The radio circuitry or communication 410 may comprise RF circuitry and baseband processing circuitry (not shown).

The base station 100/200 may also comprise a processing unit or circuitry 420 which may be configured to provide a handover procedure for a wireless terminal. The processing circuitry 420 may be any suitable type of computation unit, for example, a microprocessor, digital signal processor (DSP), field programmable gate array (FPGA), or application specific integrated circuit (ASIC), or any other form of circuitry. The base station 100/200 may further comprise a memory unit or circuitry 430 which may be any suitable type of computer readable memory and may be of volatile and/or non-volatile type. The memory 430 may be configured to store received, transmitted, and/or measured data, device parameters, communication priorities, and/or executable program instructions. The base station 100/200 may also comprise a network interface 440 for connection to other network nodes in the communication system.

In this particular example, at least some of the steps, functions, procedures, modules and/or blocks described herein are implemented in a computer program, which is loaded into the memory for execution by the processing circuitry. The processing circuitry and memory are interconnected to each other to enable normal software execution. An optional input/output device may also be interconnected to the processing circuitry and/or the memory to enable input and/or output of relevant data such as input parameter(s) and/or resulting output parameter(s).

The term 'processing circuitry' should be interpreted in a general sense as any system or device such as one or more processors capable of executing program code or computer program instructions to perform a particular processing, determining or computing task.

For example, the computer program stored in memory includes instructions executable by the processing circuitry, whereby the processing circuitry is able or operative to execute the above-described steps, functions, procedure and/or blocks.

The proposed technology will now be described as example implementations from the perspective of each individual node such as the target base station and the source base station.

In an example embodiment, there is provided a target base station 100 configured to participate in a handover procedure of User Equipment, UE, from a source base station to the target base station. The target base station 100 is configured to start a validity timer at a time instant associated with the handover procedure of the UE. The target base station 100 is also configured to maintain, while the validity timer is running, a mobility configuration of the UE defined by the source base station.

By way of example, the validity timer is associated with a validity time, and the validity time is associated to an individual UE or to a group of UEs.

As an example, the target base station 100 is configured to receive the validity time associated with the validity timer, or the target base station 100 is pre-configured with the validity time associated with the validity timer, or the target base station 100 is configured to establish the validity time associated with the validity timer.

The target base station 100 may be configured to receive, from the source base station, at least one parameter for defining at least part of the mobility configuration of the UE.

In a particular example, the target base station 100 is configured to receive an offset value from the source base station, and to apply the offset value in combination with a threshold value to define a mobility threshold. The mobility threshold may be part of the mobility configuration of the UE. The offset may be configured per UE or configured for a group of UEs.

In another example, the target base station 100 is configured to receive a group identification, group ID, from the source base station, and to retrieve, based on the received group ID, a mobility threshold from a list of mobility thresholds per group ID for the source base station. The mobility threshold may then be part of the mobility configuration of the UE.

Preferably, the target base station 100 may be configured to receive the parameter(s) for defining at least part of the mobility configuration of the UE from the source base station in a handover message during the handover execution phase. Examples of such a handover message have been given above.

As illustrated in Figure 21, the target base station 100 may comprise processing circuitry 420 and a memory 430. The memory 430 comprises instructions executable by the processing circuitry 420 to perform operations of the target base station.

In an example embodiment, there is provided a source base station 200 configured to participate in a handover procedure of User Equipment, UE, from the source base station to a target base station. The source base station 200 is configured to define a validity time representing the duration of which a mobility configuration of the UE defined by the source base station should be maintained by the target base station. The source base station 200 is also configured to send the validity time to the target base station for configuring an associated validity timer in the target base station.

By way of example, the source base station 200 is configured to send, to the target base station, at least one parameter for defining at least part of the mobility configuration of the UE.

In a particular example, the source base station 200 is configured to send an offset value to the target base station for defining, in combination with a threshold value, a mobility threshold as part of the mobility configuration of the UE. The offset may be configured per UE or configured for a group of UEs.

In another example, the source base station 200 is configured to send a group identification, group ID, to the target base station, for enabling definition of a mobility threshold in the target base station as part of the mobility configuration of the UE.

Preferably, the source base station 200 may be configured to send the parameter(s) for defining at least part of the mobility configuration of the UE to the target base station in a handover message during the handover execution phase. Examples of such a handover message have been given above.

As illustrated in Figure 21, the source base station 200 may comprise processing circuitry 420 and a memory 430. The memory 430 comprises instructions executable by the processing circuitry 420 to perform operations of the source base station.

In yet another example embodiment, there is provided a target base station 100 for providing a handover procedure for a user equipment. In this example, the target base station comprises radio circuitry 410 configured to receive, from a source base station, a configuration for the user equipment, said configuration comprising a group identification for the user equipment which has been assigned by the source base station. The target base station also comprises processing circuitry 420 configured to identify the user equipment as a member of a group based on the group identification. In this example, the radio circuitry 410 is configured to receive, from the source base station, a core network node or an operation and maintenance system, information related to a triggering of a validity timer. The processing circuitry 420 is configured to initiate the validity timer upon a triggered event associated with the identified group, and the processing circuitry 420 is further configured to maintain a current configuration of the user equipment until an expiration of the validity timer.

In yet another example embodiment, there is provided a source base station 200 for providing a handover procedure for a user equipment. In this example, the source base station comprises processing circuitry 420 configured to classify the user equipment as a member of a group of a plurality of user equipments, where the group is associated with a group identification. The source base station also comprises radio circuitry 410 configured to send, to a target base station, a configuration for the user equipment, where the configuration comprises the group identification. In this example, the radio circuitry is further configured to send, information related to a triggering of a validity timer for members of the group associated with the group identification.

As indicated herein, the network nodes may alternatively be defined as a group of function modules, where the function modules are implemented as a computer program running on a processor.

The computer program residing in memory may thus be organized as appropriate function modules configured to perform, when executed by the processor, at least part of the steps and/or tasks described herein.

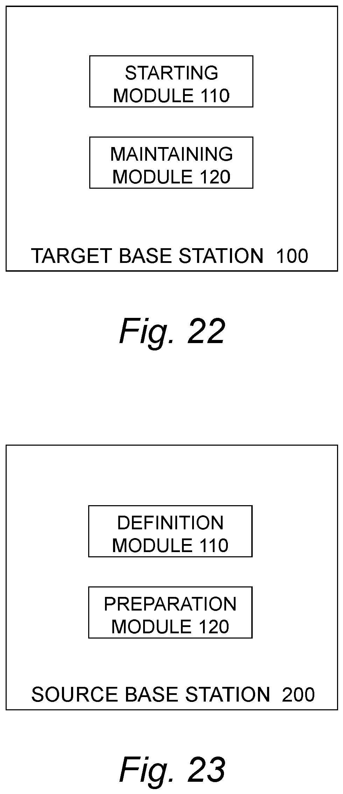

Figure 22 is a schematic block diagram illustrating an example of a target base station comprising a group of function modules.

In the example of Figure 22, the target base station 100 comprises a starting module 110 for starting a validity timer at a time instant associated with the handover procedure of the UE, and a maintaining module 120 for maintaining, while the validity timer is running, a mobility configuration of the UE defined by the source base station.

Figure 23 is a schematic block diagram illustrating an example of a source base station comprising a group of function modules.

In the example of Figure 23, the source base station 200 comprises a definition module 210 for defining a validity time representing the duration of which a mobility configuration of the UE defined by the source base station should be maintained by the target base station, and a preparation module 220 for preparing the validity time for transfer to the target base station.

With reference to the flow diagram of FIG. 13, the sending step will be regarded as a preparing step from the perspective of the processor, when regarding the flow diagram of FIG. 13 as a computer flow diagram. The processor then prepares the validity time for transfer to the target base station.

It should be noted that although terminology from 3GPP LTE has been used herein to explain the example embodiments, this should not be seen as limiting the scope of the example embodiments to only the aforementioned system. Other wireless systems, comprising WCDMA, WiMax, UMB, WiFi and GSM, may also benefit from the example embodiments disclosed herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Also note that terminology such as user equipment should be considered as non-limiting. A device or user equipment as the term is used herein, is to be broadly interpreted to comprise a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) user equipment that may combine a cellular radiotelephone with data processing; a personal digital assistant (PDA) that can comprise a radiotelephone or wireless communication system; a laptop; a camera (e.g., video and/or still image camera) having communication ability; and any other computation or communication device capable of transceiving, such as a personal computer, a home entertainment system, a television, etc. It should be appreciated that the term user equipment may also comprise any number of connected devices, wireless terminals or machine-to-machine devices.

The proposed technology provides a computer program comprising instructions, which when executed by at least one processor, cause the at least one processor to start a validity timer at a time instant associated with a handover procedure of a UE, and to maintain, while the validity timer is running, a mobility configuration of the UE defined by a source base station.

The proposed technology also provides a computer program comprising instructions, which when executed by at least one processor, cause the at least one processor to define a validity time representing the duration of which a mobility configuration of a UE defined by a source base station should be maintained by a target base station, and to prepare the validity time for transfer to the target base station.

The proposed technology further provides a carrier comprising the computer program, wherein the carrier is one of an electronic signal, an optical signal, an electromagnetic signal, a magnetic signal, an electric signal, a radio signal, a microwave signal, or a computer-readable storage medium.

The various example embodiments described herein are described in the general context of method steps or processes, which may be implemented in one aspect by a computer program product, embodied in a computer-readable medium, comprising computer-executable instructions, such as program code, executed by computers in networked environments. A computer-readable medium may comprise removable and non-removable storage devices comprising, but not limited to, Read Only Memory (ROM), Random Access Memory (RAM), compact discs (CDs), digital versatile discs (DVD), etc. Generally, program modules may comprise routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### ABBREVIATIONS

- 3GPP: 3rd Generation Partnership Project
- BSS: Base Station Subsystem
- CN: Core Network
- CR: Cell Restriction
- DM: Domain Manager
- UTRAN: Universal Terrestrial Radio Access Network
- GERAN: GSM EDGE Radio Access Network
- HO: Hand Over
- MLB: Mobility Load Balance
- MRO: Mobility Robustness Optimization
- IE: Information Element
- IRAT: inter-RAT
- LTE: Long Term Evolution
- NE: Node Elements
- NM: Node Manager
- NMS: Network Management Systems
- RAT: Radio Access Technology
- eNB: evolved Node B
- RNC: Radio Network Controller
- OAM: Operation and Maintenance
- OSS: Operation and Support System
- UE: User Equipment
- SON: Self-Optimizing/Organizing Network
- RANAP: Radio Access Network Application Part
- RB: Radio Bearer
- RRC: Radio Resource Control
- RRM: Radio Resource Management
- RSRP: Reference Signal Received Power
- RSRQ: Reference Signal Received Quality
- UTRA: Universal Terrestrial Radio Access

### REFERENCES

[1] RP-122037, "Study on Next Generation SON for UTRA and LTE"
[2] R3-130074, "Detailed scope for the Real. 12 SON study item
[3] TS 36.423 "X2 application protocol (X2AP)" (Release 11)

## Claims

1. A method performed by a target network node (100) for participating in a handover procedure of User Equipment, UE, from a source network node (200) to the target network node (100), said method comprising the steps of:
- starting (S1) a validity timer at a time instant associated with the handover procedure of the UE, wherein the validity timer is associated with a validity time representing the duration of which a mobility configuration of the UE defined by the source network node (200) should be maintained by the target network node (100); and
- maintaining (S2), while the validity timer is running, the mobility configuration of the UE defined by the source network node, and
wherein the target network node (100) receives, from the source network node (200), at least one parameter for defining at least part of the mobility configuration of the UE.

2. The method of claim 1, wherein the validity timer is associated with a validity time that is associated to an individual UE or to a group of UEs, and
the target network node receives the validity time associated with the validity timer, or
the target network node is pre-configured with the validity time associated with the validity timer, or
the target network node establishes the validity time associated with the validity timer.

3. The method of claim 1 or 2, wherein the mobility configuration of the UE comprises at least one mobility parameter for the handover procedure.

4. The method of claim 3, wherein the target network node receives an offset value from the source network node, and applies the offset value in combination with a threshold value to define a mobility threshold, wherein said mobility threshold is part of the mobility configuration of the UE, wherein the offset is configured per UE or configured for a group of UEs.

5. The method of claim 4, wherein the target network node receives the offset value and a validity time associated with the validity timer from the source network node.

6. A method performed by a source network node (200) for participating in a handover procedure of User Equipment, UE, from the source network node (200) to a target network node (100), said method comprising the steps of:
- defining (S11) a validity time representing the duration of which a mobility configuration of the UE defined by the source network node (200) should be maintained by the target network node (100); and
- sending (S12) the validity time to the target network node for configuration of an associated validity timer in the target network node (100), and
wherein said source network node (200) sends, to the target network node (100), at least one parameter for defining at least part of the mobility configuration of the UE.

7. A target base station (100) configured to participate in a handover procedure of User Equipment, UE, from a source base station (200) to the target base station (100),
wherein the target base station (100) is configured to start a validity timer at a time instant associated with the handover procedure of the UE, wherein the validity timer is associated with a validity time representing the duration of which a mobility configuration of the UE defined by the source base station (200) should be maintained by the target base station (100); and
wherein the target base station (100) is configured to maintain, while the validity timer is running, a mobility configuration of the UE defined by the source base station (200), and
wherein the target base station (100) is configured to receive, from the source base station (200), at least one parameter for defining at least part of the mobility configuration of the UE.

8. The target base station of claim 7, wherein the validity timer is associated with a validity time that is associated to an individual UE or to a group of UEs, and
the target base station (100) is configured to receive the validity time associated with the validity timer, or
the target base station (100) is pre-configured with the validity time associated with the validity timer, or
the target base station (100) is configured to establish the validity time associated with the validity timer.

9. The target base station of claim 7, wherein the target base station (100) is configured to receive an offset value from the source base station, and to apply the offset value in combination with a threshold value to define a mobility threshold, wherein said mobility threshold is part of the mobility configuration of the UE, wherein the offset is configured per UE or configured for a group of UEs.

10. The target base station of claim 7, wherein the target base station (100) is configured to receive a group identification, group ID, from the source base station, and to retrieve, based on the received group ID, a mobility threshold from a list of mobility thresholds per group ID for the source base station, wherein said mobility threshold is part of the mobility configuration of the UE.

11. The target base station of any of the claims 7 to 10, wherein the target base station (100) is configured to receive said at least one parameter for defining at least part of the mobility configuration of the UE from the source base station in a handover message during the handover execution phase.

12. A source base station (200) configured to participate in a handover procedure of User Equipment, UE, from the source base station (200) to a target base station (100),
wherein the source base station (200) is configured to define a validity time representing the duration of which a mobility configuration of the UE defined by the source base station (200) should be maintained by the target base station (100); and
wherein the source base station (200) is configured to send the validity time to the target base station for configuration ofg an associated validity timer in the target base station (100), and
wherein the source base station (200) is configured to send, to the target base station (100), at least one parameter for defining at least part of the mobility configuration of the UE.

13. The source base station of claim 12, wherein the source base station (200) is configured to send an offset value to the target base station for defining, in combination with a threshold value, a mobility threshold as part of the mobility configuration of the UE, wherein the offset is configured per UE or configured for a group of UEs.

14. The source base station of claim 13, wherein the source base station (200) is configured to send a group identification, group ID, to the target base station, for enabling definition of a mobility threshold in the target base station as part of the mobility configuration of the UE.

15. The source base station of any of the claims 12 to 14, wherein the source base station (200) is configured to send said at least one parameter for defining at least part of the mobility configuration of the UE to the target base station in a handover message during the handover execution phase.

## Patentansprüche

1. Ein von einem Zielnetzwerkknoten (100) durchgeführtes Verfahren zum Teilnehmen an einem Übergabeverfahren eines Benutzergeräts, UE (User Equipment), von einem Quellnetzwerkknoten (200) an den Zielnetzwerkknoten (100), wobei das Verfahren die folgenden Schritte umfasst:
- Starten (S1) einer Gültigkeitszeituhr zu einem mit dem Übergabeverfahren des UE verbundenen Zeitpunkt, wobei die Gültigkeitszeituhr mit der Gültigkeitszeit verbunden ist, die die Dauer repräsentiert, für die eine vom Quellnetzwerkknoten (200) definierte Mobilitätskonfiguration des UE vom Zielnetzwerkknoten (100) erhalten werden sollte; und
- Erhalten (S2), während die Gültigkeitszeituhr läuft, der vom Quellnetzwerkknoten (200) definierten Mobilitätskonfiguration des UE, und
wobei der Zielnetzwerkknoten (100), vom Quellnetzwerkknoten (200), mindestens einen Parameter zum Definieren von mindestens einem Teil der Mobilitätskonfiguration des UE empfängt.

2. Verfahren nach Anspruch 1, wobei die Gültigkeitszeituhr mit der Gültigkeitszeit verbunden ist, die mit einem individuellen UE oder einer Gruppe von UEs verbunden ist, und
der Zielnetzwerkknoten die mit der Gültigkeitszeituhr verbundene Gültigkeitszeit empfängt, oder
der Zielnetzwerkknoten mit der Gültigkeitszeituhr verbundenen Gültigkeitszeit vorkonfiguriert ist, oder
der Zielnetzwerkknoten die mit der Gültigkeitszeituhr verbundene Gültigkeitszeit feststellt.

3. Verfahren nach Anspruch 1 oder 2, wobei die Mobilitätskonfiguration des UE mindestens einen Mobilitätsparameter für das Übergabeverfahren umfasst.

4. Verfahren nach Anspruch 3, wobei der Zielnetzwerkknoten vom Quellnetzwerkknoten einen Offsetwert empfängt und den Offsetwert in Kombination mit einem Schwellenwert anwendet, um eine Mobilitätsschwelle zu definieren, wobei die Mobilitätsschwelle ein Teil der Mobilitätskonfiguration des UE ist, wobei das Offset per UE konfiguriert oder für eine Gruppe von UEs konfiguriert ist.

5. Verfahren nach Anspruch 4, wobei der Zielnetzwerkknoten vom Quellnetzwerkknoten den Offsetwert und eine mit der Gültigkeitszeituhr verbundene Gültigkeitszeit empfängt.

6. Ein von einem Quellnetzwerkknoten (200) durchgeführtes Verfahren zum Teilnehmen an einem Übergabeverfahren eines Benutzergeräts, UE, von dem Quellnetzwerkknoten (200) an einen Zielnetzwerkknoten (100), wobei das Verfahren die folgenden Schritte umfasst:
- Definieren (S11) einer Gültigkeitszeit, die die Dauer repräsentiert, für die eine vom Quellnetzwerkknoten (200) definierte Mobilitätskonfiguration des UE vom Zielnetzwerkknoten (100) erhalten werden sollte; und
- Senden (S12) der Gültigkeitszeit an den Zielnetzwerkknoten zur Konfiguration einer verbundenen Gültigkeitszeituhr im Zielnetzwerkknoten (100), und
wobei der Quellnetzwerkknoten (200), an den Zielnetzwerkknoten (100), mindestens einen Parameter zum Definieren von mindestens einem Teil der Mobilitätskonfiguration des UE sendet.

7. Eine Zielbasisstation (100), die konfiguriert ist, um an einem Übergabeverfahren eines Benutzergeräts, UE, von einer Quellbasisstation (200) an die Zielbasisstation (100) teilzunehmen,
wobei die Zielbasisstation (100) konfiguriert ist, um eine Gültigkeitszeituhr zu einem mit dem Übergabeverfahren des UE verbundenen Zeitpunkt zu starten, wobei die Gültigkeitszeituhr mit der Gültigkeitszeit verbunden ist, die die Dauer repräsentiert, für die eine von der Quellbasisstation (200) definierte Mobilitätskonfiguration des UE von der Zielbasisstation (100) erhalten werden sollte; und
wobei die Zielbasisstation (100) konfiguriert ist, um, während die Gültigkeitszeituhr läuft, eine von der Quellbasisstation (200) definierte Mobilitätskonfiguration des UE zu erhalten, und
wobei die Zielbasisstation (100) konfiguriert ist, um, von der Quellbasisstation (200), mindestens einen Parameter zum Definieren von mindestens einem Teil der Mobilitätskonfiguration des UE zu empfangen.

8. Zielbasisstation nach Anspruch 7, wobei die Gültigkeitszeituhr mit der Gültigkeitszeit verbunden ist, die mit einem individuellen UE oder einer Gruppe von UEs verbunden ist, und
die Zielbasisstation (100) konfiguriert ist, um die mit der Gültigkeitszeituhr verbundene Gültigkeitszeit zu empfangen, oder
die Zielbasisstation (100) mit der mit der Gültigkeitszeituhr verbundenen Gültigkeitszeit vorkonfiguriert ist, oder
die Zielbasisstation (100) konfiguriert ist, um die mit der Gültigkeitszeituhr verbundene Gültigkeitszeit festzustellen.

9. Zielbasisstation nach Anspruch 7, wobei die Zielbasisstation (100) konfiguriert ist, um von der Quellbasisstation einen Offsetwert zu empfangen und den Offsetwert in Kombination mit einem Schwellenwert anzuwenden, um eine Mobilitätsschwelle zu definieren, wobei die Mobilitätsschwelle ein Teil der Mobilitätskonfiguration des UE ist, wobei das Offset per UE konfiguriert oder für eine Gruppe von UEs konfiguriert ist.

10. Zielbasisstation nach Anspruch 7, wobei die Zielbasisstation (100) konfiguriert ist, um, von der Quellbasisstation, eine Gruppenidentifikation, Gruppen-ID, zu empfangen und um, basierend auf der empfangenen Gruppen-ID, eine Mobilitätsschwelle von einer Liste von Mobilitätsschwellen per Gruppen-ID für die Quellbasisstation abzurufen, wobei die Mobilitätsschwelle ein Teil der Mobilitätskonfiguration des UE ist.

11. Zielbasisstation nach einem der Ansprüche 7 bis 10, wobei die Zielbasisstation (100) konfiguriert ist, um während der Übergabeausführungsphase in einer Übergabenachricht von der Quellbasisstation den mindestens einen Parameter zum Definieren von mindestens einem Teil der Mobilitätskonfiguration des UE zu empfangen.

12. Eine Quellbasisstation (200), die konfiguriert ist, um an einem Übergabeverfahren eines Benutzergeräts, UE, von der Quellbasisstation (200) an eine Zielbasisstation (100) teilzunehmen,
wobei die Quellbasisstation (200) konfiguriert ist, um eine Gültigkeitszeit zu definieren, die die Dauer repräsentiert, für die eine von der Quellbasisstation (200) definierte Mobilitätskonfiguration des UE von der Zielbasisstation (100) erhalten werden sollte; und
wobei die Quellbasisstation (200) konfiguriert ist, um die Gültigkeitszeit an die Zielbasisstation zur Konfiguration einer verbundenen Gültigkeitszeituhr in der Zielbasisstation (100) zu senden, und
wobei die Quellbasisstation (200) konfiguriert ist, um, an die Zielbasisstation (100), mindestens einen Parameter zum Definieren von mindestens einem Teil der Mobilitätskonfiguration des UE zu senden.

13. Quellbasisstation nach Anspruch 12, wobei die Quellbasisstation (200) konfiguriert ist, um an die Zielbasisstation einen Offsetwert zu senden, zum Definieren, in Kombination mit einem Schwellenwert, einer Mobilitätsschwelle als ein Teil der Mobilitätskonfiguration des UE, wobei das Offset per UE konfiguriert oder für eine Gruppe von UEs konfiguriert ist.

14. Quellbasisstation nach Anspruch 13, wobei die Quellbasisstation (200) konfiguriert ist, um an die Zielbasisstation eine Gruppenidentifikation, Gruppen-ID, zu senden, zum Ermöglichen der Definition einer Mobilitätsschwelle in der Zielbasisstation als ein Teil der Mobilitätskonfiguration des UE.

15. Quellbasisstation nach einem der Ansprüche 12 bis 14, wobei die Quellbasisstation (200) konfiguriert ist, um während der Übergabeausführungsphase in einer Übergabenachricht an die Zielbasisstation mindestens einen Parameter zum Definieren von mindestens einem Teil der Mobilitätskonfiguration des UE zu senden.

## Revendications

1. Procédé, mis en oeuvre par un noeud de réseau cible (100), de participation à une procédure de transfert intercellulaire d'un équipement d'utilisateur, UE, d'un noeud de réseau source (200) au noeud de réseau cible (100), ledit procédé comprenant les étapes ci-dessous consistant à :
- démarrer (S1) un temporisateur de validité à un instant temporel associé à la procédure de transfert intercellulaire de l'équipement UE, dans lequel le temporisateur de validité est associé à une durée de validité qui représente la durée au cours de laquelle une configuration de mobilité de l'équipement UE définie par le noeud de réseau source (200) devrait être maintenue par le noeud de réseau cible (100) ; et
- maintenir (S2), tandis que le temporisateur de validité est en cours d'exécution, la configuration de mobilité de l'équipement UE définie par le noeud de réseau source ; et
dans lequel le noeud de réseau cible (100) reçoit, en provenance du noeud de réseau source (200), au moins un paramètre destiné à définir au moins une partie de la configuration de mobilité de l'équipement UE.

2. Procédé selon la revendication 1, dans lequel le temporisateur de validité est associé à une durée de validité qui est associée à un équipement UE individuel ou à un groupe d'équipements UE ; et
le noeud de réseau cible reçoit la durée de validité associée au temporisateur de validité ; ou
le noeud de réseau cible est préconfiguré avec la durée de validité associée au temporisateur de validité ; ou
le noeud de réseau cible établit la durée de validité associée au temporisateur de validité.

3. Procédé selon la revendication 1 ou 2, dans lequel la configuration de mobilité de l'équipement UE comprend au moins un paramètre de mobilité pour la procédure de transfert intercellulaire.

4. Procédé selon la revendication 3, dans lequel le noeud de réseau cible reçoit une valeur de décalage en provenance du noeud de réseau source, et applique la valeur de décalage en combinaison avec une valeur de seuil en vue de définir un seuil de mobilité, dans lequel ledit seuil de mobilité fait partie de la configuration de mobilité de l'équipement UE, dans lequel le décalage est configuré pour chaque équipement UE individuel ou est configuré pour un groupe d'équipements UE.

5. Procédé selon la revendication 4, dans lequel le noeud de réseau cible reçoit la valeur de décalage et une durée de validité associée au temporisateur de validité en provenance du noeud de réseau source.

6. Procédé, mis en oeuvre par un noeud de réseau source (200), de participation à une procédure de transfert intercellulaire d'un équipement d'utilisateur, UE, du noeud de réseau source (200) à un noeud de réseau cible (100), ledit procédé comprenant les étapes ci-dessous consistant à :
- définir (S11) une durée de validité qui représente la durée au cours de laquelle une configuration de mobilité de l'équipement UE définie par le noeud de réseau source (200) devrait être maintenue par le noeud de réseau cible (100) ; et
- envoyer (S 12) la durée de validité au noeud de réseau cible pour la configuration d'un temporisateur de validité associé dans le noeud de réseau cible (100) ; et
dans lequel ledit noeud de réseau source (200) envoie, au noeud de réseau cible (100), au moins un paramètre destiné à définir au moins une partie de la configuration de mobilité de l'équipement UE.

7. Station de base cible (100) configurée de manière à prendre part à une procédure de transfert intercellulaire d'un équipement d'utilisateur, UE, d'une station de base source (200) à la station de base cible (100) ;
dans laquelle la station de base cible (100) est configurée de manière à démarrer un temporisateur de validité à un instant temporel associé à la procédure de transfert intercellulaire de l'équipement UE, dans laquelle le temporisateur de validité est associé à une durée de validité qui représente la durée au cours de laquelle une configuration de mobilité de l'équipement UE définie par la station de base source (200) devrait être maintenue par la station de base cible (100) ; et
dans laquelle la station de base cible (100) est configurée de manière à maintenir, tandis que le temporisateur de validité est en cours d'exécution, une configuration de mobilité de l'équipement UE définie par la station de base source (200) ; et
dans laquelle la station de base cible (100) est configurée de manière à recevoir, en provenance de la station de base source (200), au moins un paramètre destiné à définir au moins une partie de la configuration de mobilité de l'équipement UE.

8. Station de base cible selon la revendication 7, dans laquelle le temporisateur de validité est associé à une durée de validité qui est associée à un équipement UE individuel ou à un groupe d'équipements UE ; et
la station de base cible (100) est configurée de manière à recevoir la durée de validité associée au temporisateur de validité ; ou
la station de base cible (100) est préconfigurée avec la durée de validité associée au temporisateur de validité ; ou
la station de base cible (100) est configurée de manière à établir la durée de validité associée au temporisateur de validité.

9. Station de base cible selon la revendication 7, dans laquelle la station de base cible (100) est configurée de manière à recevoir une valeur de décalage en provenance de la station de base source, et à appliquer la valeur de décalage en combinaison avec une valeur de seuil en vue de définir un seuil de mobilité, dans laquelle ledit seuil de mobilité fait partie de la configuration de mobilité de l'équipement UE, dans laquelle le décalage est configuré pour chaque équipement UE individuel ou est configuré pour un groupe d'équipements UE.

10. Station de base cible selon la revendication 7, dans laquelle la station de base cible (100) est configurée de manière à recevoir une identification de groupe, appelée « ID de groupe », en provenance de la station de base source, et à extraire, sur la base de l'ID de groupe reçue, un seuil de mobilité d'une liste de seuils de mobilité par ID de groupe pour la station de base source, dans laquelle ledit seuil de mobilité fait partie de la configuration de mobilité de l'équipement UE.

11. Station de base cible selon l'une quelconque des revendications 7 à 10, dans laquelle la station de base cible (100) est configurée de manière à recevoir ledit au moins un paramètre destiné à définir au moins une partie de la configuration de mobilité de l'équipement UE en provenance de la station de base source dans un message de transfert intercellulaire au cours de la phase d'exécution de transfert intercellulaire.

12. Station de base source (200) configurée de manière à prendre part à une procédure de transfert intercellulaire d'un équipement d'utilisateur, UE, de la station de base source (200) à une station de base cible (100) ;
dans laquelle la station de base source (200) est configurée de manière à définir une durée de validité qui représente la durée au cours de laquelle une configuration de mobilité de l'équipement UE définie par la station de base source (200) devrait être maintenue par la station de base cible (100) ; et
dans laquelle la station de base source (200) est configurée de manière à envoyer la durée de validité à la station de base cible pour la configuration d'un temporisateur de validité associé dans la station de base cible (100) ; et
dans laquelle la station de base source (200) est configurée de manière à envoyer, à la station de base cible (100), au moins un paramètre destiné à définir au moins une partie de la configuration de mobilité de l'équipement UE.

13. Station de base source selon la revendication 12, dans laquelle la station de base source (200) est configurée de manière à envoyer une valeur de décalage à la station de base cible en vue de définir, en combinaison avec une valeur de seuil, un seuil de mobilité dans le cadre de la configuration de mobilité de l'équipement UE, dans laquelle le décalage est configuré pour chaque équipement UE individuel ou est configuré pour un groupe d'équipements UE.

14. Station de base source selon la revendication 13, dans laquelle la station de base source (200) est configurée de manière à envoyer une identification de groupe, appelée « ID de groupe », à la station de base cible, en vue de permettre la définition d'un seuil de mobilité dans la station de base cible dans le cadre de la configuration de mobilité de l'équipement UE.

15. Station de base source selon l'une quelconque des revendications 12 à 14, dans laquelle la station de base source (200) est configurée de manière à envoyer ledit au moins un paramètre destiné à définir au moins une partie de la configuration de mobilité de l'équipement UE, à la station de base cible, dans un message de transfert intercellulaire, au cours de la phase d'exécution de transfert intercellulaire.
